(19) Europäisches Patentamt
European Patent Office
Office européen des brevets

(11) **EP 3 852 463 B1**

(12) **EUROPEAN PATENT SPECIFICATION**

(45) Date of publication and mention
of the grant of the patent:
**06.11.2024 Bulletin 2024/45**

(21) Application number: **19864660.6**

(22) Date of filing: **27.09.2019**

(51) International Patent Classification (IPC):
*H04W 72/0446* (2023.01)    *H04W 72/02* (2009.01)
*H04W 72/23* (2023.01)

(52) Cooperative Patent Classification (CPC):
**H04W 72/0446;** H04W 72/02; H04W 72/23

(86) International application number:
**PCT/CN2019/108487**

(87) International publication number:
**WO 2020/063838 (02.04.2020 Gazette 2020/14)**

(54) **METHOD AND APPARATUS FOR TRANSMITTING DATA**

VERFAHREN UND VORRICHTUNG ZUR ÜBERTRAGUNG VON DATEN

PROCÉDÉ ET APPAREIL DE TRANSMISSION DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.09.2018  CN 201811163123**

(43) Date of publication of application:
**21.07.2021 Bulletin 2021/29**

(73) Proprietor: **Huawei Technologies Co., Ltd.
Longgang
Shenzhen, Guangdong 518129 (CN)**

(72) Inventors:
• **XING, Shuangshuang
Shenzhen, Guangdong 518129 (CN)**
• **GONG, Zhengwei
Shenzhen, Guangdong 518129 (CN)**
• **XU, Xiuqiang
Shenzhen, Guangdong 518129 (CN)**
• **WU, Liang
Shenzhen, Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 3 547 772        EP-A1- 3 592 072
WO-A1-2018/082525       WO-A1-2018/112932
WO-A1-2018/121332       WO-A1-2018/171606
CN-A- 107 223 358       CN-A- 107 241 288
CN-A- 108 347 318       CN-A- 108 365 908
CN-A- 108 430 106

## Description

## TECHNICAL FIELD

This application relates to the communications field, and more specifically, to a data transmission method, a data reception method and a data reception apparatus in the communications field.

## BACKGROUND

A fifth generation mobile communications technology (5th generation, 5G) includes three application scenarios: enhanced mobile broadband (enhanced mobile broadband, eMBB), ultra-reliable low latency communication (ultra-reliable low latency communication, URLLC), and massive machine-type communication (massive machine-type communication, mMTC). Data packet sizes, traffic models (traffic model), and the like in services of different scenarios are not exactly the same. For example, an eMBB service is characterized by a larger data packet and insensitivity to a data transmission latency. Compared with the eMBB service, a URLLC service is characterized by a smaller data packet and an occasional service, and further requires ultra-reliable low latency data transmission.

When the eMBB service and the URLLC service coexist in a system, it may be considered that the eMBB service and the URLLC service share same time-frequency resources. However, the two types of services correspond to different transmission time intervals. For example, a transmission time interval of the eMBB service is usually greater than a transmission time interval of the URLLC service. In a time-frequency resource area shared by the eMBB service and the URLLC service, one transmission time interval of the eMBB service may overlap N time domain resources used to transmit the URLLC service. To enable an advanced receiver to receive, in a shared time-frequency resource area, transmitted data of the two types of services, a system needs to allocate a plurality of transport block sizes to the eMBB service. Consequently, signaling overheads of the system are relatively large.

WO 2018/112932 A1 discloses a data transmission method and apparatus, which can improve the performance of a system. The method comprises: a terminal device receiving indication information sent by a network device, the indication information being used to indicate a first downlink scheduling time domain resource in a first time-frequency resource region, wherein frequency domain resources comprised in the first time-frequency resource region are a part of a system bandwidth; and the terminal device receiving, on a first downlink data time domain resource, data sent by the network device according to the indication information.

WO 2018/171606 A1 discloses a method for sending data and an apparatus thereof. The method comprises: a terminal device receives first control information on a first time unit, the first control information indicating first time-domain resources used for sending first information blocks; the terminal device receives the first information blocks on at least part of the first time-domain resources according to the first control information; the terminal device receives second control information on a second time unit, the second control information indicating second time-domain resources used for sending the first information blocks; and the terminal device receives the first information blocks on the second time-domain resources according to the second control information, the first time unit being different from the second time unit, and the first time-domain resources and the second time-domain resources having overlapped time-domain resources.

## SUMMARY

This application provides a data transmission method, a data reception method and a data reception apparatus, according to the attached claims, to avoid excessive signaling overheads in a system while mutual interference is reduced when different services share a same resource. The invention is set out in the appended claims. In the following, parts of the description and drawings referring to embodiments which are not covered by the claims are not presented as embodiments of the invention, but as examples useful for understanding the invention.

According to a first aspect, a data transmission method is provided as an example for a better understanding. The method includes:

>obtaining first information, where the first information is used to indicate a first time domain resource, and the first time domain resource is used to carry a first service;
>obtaining second information, where the second information is used to indicate that a second time domain resource includes N second subresources, and N is an integer greater than or equal to 1;
>determining, based on the first time domain resource and the N second subresources, K first subresources included in the first time domain resource, where K is an integer greater than or equal to 1; and
>determining a quantity of K sub transport blocks included in the first service carried on the first time domain resource, where the K sub transport blocks one-to-one correspond to the K first subresources, and each sub transport block is carried on a corresponding first subresource.

According to the foregoing technical solution, when different services (for example, an eMBB service and a URLLC service) share a same time domain resource to perform transmission, it can be ensured that SIC detection can be jointly performed on transport blocks or code blocks of different services on one time domain resource, to avoid excessive signaling overheads in a system. This improves URLLC detection performance, and also avoids a performance loss of the eMBB service, to greatly improve resource-sharing transmission performance of the system.

It should be understood that the data transmission method in this embodiment of this application may be applied to both an uplink data transmission scenario and a downlink data transmission scenario. In the uplink data transmission scenario, a data sending device may be a terminal device. In the downlink data transmission scenario, a data sending device may be a network device.

According to the first aspect, the second time domain resource is used to carry the second service, and the first time domain resource and the second time domain resource have an overlapping area in time domain, and have at least an overlapping area in frequency domain.

It should be understood that, in this embodiment of this application, one time domain resource or one subresource includes at least one time domain unit, and the time domain unit may be an OFDM symbol, an OFDM symbol group, a slot, a subframe, or the like. This is not limited in this application.

With reference to the first aspect, in some implementations of the first aspect, the determining, based on the first time domain resource and the N second subresources, K first subresources included in the first time domain resource includes:

determining the K first subresources based on a time domain unit start number of the first time domain resource, a time domain unit end number of the first time domain resource, and time domain unit end numbers of the N second subresources.

It should be noted that the determining the K first subresources based on the time domain unit end numbers of the N second subresources includes but is not limited to the following two manners:

For example, a time domain unit number may be an index of a symbol included in a time domain resource.

In a first possible implementation, a symbol number included in the first time domain resource is greater than a symbol number included in the second time domain resource, that is, the time domain unit end number of the first time domain resource is greater than a time domain unit end number of the second time domain resource. In this case, the first time domain resource is divided into the K first subresources based on a symbol number corresponding to an end time domain unit of each of the N second subresources.

In a second possible implementation, a symbol number included in the first time domain resource is less than or equal to a symbol number included in the second time domain resource, that is, the time domain unit end number of the first time domain resource is less than or equal to a time domain unit end number of the second time domain resource. For example, it is assumed that the second time domain resource corresponds to 10 symbols whose time domain unit numbers are #0 to #9, and includes three second subresources. The time domain unit numbers #0 to #2 correspond to the 1st second subresource, the time domain unit numbers #3 to #5 correspond to the 2nd second subresource, and the time domain unit numbers #6 to #9 correspond to the 3rd second subresource. The first time domain resource corresponds to six symbols whose time domain unit numbers are #0 to #5. In this case, the first time domain resource is divided based on time domain unit end numbers of the first two subresources in the three second subresources, that is, based on the corresponding time domain unit numbers #2 and #5.

With reference to the first aspect, in some implementations of the first aspect, the 1st first subresource in the K first subresources includes resources between the time domain unit start number of the first time domain resource and a time domain unit end number of the $L^{th}$ second subresource, and the $L^{th}$ second subresource is the 1st second subresource in a non-empty intersection of the first time domain resource and the N second subresources, where L is an integer less than or equal to N.

With reference to the first aspect, in some implementations of the first aspect, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the 1st first subresource in the K first subresources, the second subresource set is a resource set including the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource.

With reference to the first aspect, in some implementations of the first aspect, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the 1st first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

With reference to the first aspect, in some implementations of the first aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and the K-2 first subresources have same time domain unit end numbers as corresponding second subresources in the second subresource set.

With reference to the first aspect, in some implementations of the first aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

With reference to the first aspect, in some implementations of the first aspect, the Kth first subresource in the K first subresources includes a resource that is in the first time domain resource and that has a time domain unit start number greater than the time domain unit end number of the second time domain resource.

With reference to the first aspect, in some implementations of the first aspect, the method further includes:

determining a transport block size of the first service based on the first time domain resource; and
determining sizes of the K sub transport blocks based on the transport block size and the K first subresources.

With reference to the first aspect, in some implementations of the first aspect, the determining sizes of the K sub transport blocks based on the transport block size and the K first subresources includes:
determining the sizes of the K sub transport blocks based on the transport block size and a quantity of OFDM symbols included in each of the K first subresources, where a sum of the sizes of the K sub transport blocks equals to the transport block size.

With reference to the first aspect, in some implementations of the first aspect, the method further includes:
determining, based on the sizes of the K sub transport blocks and a maximum code block size of an encoder, a quantity of code blocks and code block sizes included in each of the K sub transport blocks.

With reference to the first aspect, in some implementations of the first aspect, the first information may be carried in dynamic control signaling.

For example, the first information may be carried in DCI sent by a network device to a terminal device.

With reference to the first aspect, in some implementations of the first aspect, the second information may be carried in semi-static radio resource control signaling.

For example, the second information may be carried in RRC signaling sent by a network device to a terminal device. According to a second aspect, a data transmission method is provided, including:

sending first information, where the first information is used to indicate a first time domain resource, and the first time domain resource is used to carry a first service;
sending second information, where the second information is used to indicate that a second time domain resource includes N second subresources, and N is an integer greater than or equal to 1;
determining, based on the first time domain resource and the N second subresources, K first subresources included in the first time domain resource, where K is an integer greater than or equal to 1; and
receiving, respectively on the K first subresources, K sub transport blocks included in the first service of a terminal device, where the K sub transport blocks are carried on the corresponding first subresources.

According to the foregoing technical solution, a network device may divide the time domain resource carrying the first service to determine the K first subresources, so as to receive the K sub transport blocks on the K subresources. This avoids excessive signaling overheads in a system when different services share a same resource.

According to the second aspect, the second time domain resource is used to carry the second service, and the first time domain resource and the second time domain resource have an overlapping area in time domain, and have at least an overlapping area in frequency domain.

With reference to the second aspect, in some implementations of the second aspect, the determining, based on the first time domain resource and the N second subresources, K first subresources included in the first time domain resource includes:

determining the K first subresources based on a time domain unit start number of the first time domain resource, a time domain unit end number of the first time domain resource, and time domain unit end numbers of the N second subresources.

With reference to the second aspect, in some implementations of the second aspect, the $1^{st}$ first subresource in the K first subresources includes resources between the time domain unit start number of the first time domain resource and a time domain unit end number of the $L^{th}$ second subresource, and the $L^{th}$ second subresource is the $1^{st}$ second subresource in a non-empty intersection of the first time domain resource and the N second subresources, where L is an integer less than or equal to N.

With reference to the second aspect, in some implementations of the second aspect, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource. With reference to the second aspect, in some implementations of the second aspect, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

With reference to the second aspect, in some implementations of the second aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and the K-2 first subresources have same time domain unit end numbers as corresponding second subresources in the second subresource set.

With reference to the second aspect, in some implementations of the second aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

With reference to the second aspect, in some implementations of the second aspect, the $K^{th}$ first subresource in the K first subresources includes a resource that is in the first time domain resource and that has a time domain unit start number greater than the time domain unit end number of the second time domain resource.

With reference to the second aspect, in some implementations of the second aspect, the method further includes:

determining a transport block size of the first service based on the first time domain resource; and
determining sizes of the K sub transport blocks based on the transport block size and the K first subresources.

With reference to the second aspect, in some implementations of the second aspect, the determining sizes of the K sub transport blocks based on the transport block size and the K first subresources includes: determining the sizes of the K sub transport blocks based on the transport block size and a quantity of OFDM symbols included in each of the K first subresources, where a sum of the sizes of the K sub transport blocks equals to the transport block size.

With reference to the second aspect, in some implementations of the second aspect, the method further includes: determining, based on the sizes of the K sub transport blocks and a maximum code block size of an encoder, a quantity of code blocks and code block sizes included in each of the K sub transport blocks.

With reference to the second aspect, in some implementations of the second aspect, the first information may be carried in dynamic control signaling.

For example, the first information may be carried in DCI sent by a network device to a terminal device.

With reference to the second aspect, in some implementations of the second aspect, the second information may be carried in semi-static radio resource control signaling.

For example, the second information may be carried in RRC signaling sent by a network device to a terminal device. According to a third aspect, a data transmission apparatus is provided, including:

a transceiver unit, configured to obtain first information, where the first information is used to indicate a first time domain resource, and the first time domain resource is used to carry a first service, where the transceiver unit is further configured to obtain second information, where the second information is used to indicate that a second time domain resource includes N second subresources, and N is an integer greater than or equal to 1; and a processing unit, configured to determine, based on the first time domain resource and the N second subresources, K first subresources included in the first time domain resource, where K is an integer greater than or equal to 1, where the processing unit is further configured to determine a quantity of K sub transport blocks included in the first service carried on the first time domain resource, where the K sub transport blocks one-to-one correspond to the K first subresources, and each sub transport block is carried on a corresponding first subresource.

It should be understood that the data transmission apparatus in this embodiment of this application may be a terminal device.

According to the third aspect, the second time domain resource is used to carry the second service, and the first time domain resource and the second time domain resource have an overlapping area in time domain, and have at least an overlapping area in frequency domain.

With reference to the third aspect, in some implementations of the third aspect, the processing unit is specifically configured to determine the K first subresources based on a time domain unit start number of the first time domain resource, a time domain unit end number of the first time domain resource, and time domain unit end numbers of the N second subresources.

With reference to the third aspect, in some implementations of the third aspect, the $1^{st}$ first subresource in the K first subresources includes resources between the time domain unit start number of the first time domain resource and a time domain unit end number of the $L^{th}$ second subresource, and the $L^{th}$ second subresource is the $1^{st}$ second subresource in a non-empty intersection of the first time domain resource and the N second subresources, where L is an integer less than or equal to N.

With reference to the third aspect, in some implementations of the third aspect, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource.

With reference to the third aspect, in some implementations of the third aspect, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

With reference to the third aspect, in some implementations of the third aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and the K-2 first subresources have same time domain unit end numbers as corresponding second subresources in the second subresource set.

With reference to the third aspect, in some implementations of the third aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

With reference to the third aspect, in some implementations of the third aspect, the Kth first subresource in the K first subresources includes a resource that is in the first time domain resource and that has a time domain unit start number greater than the time domain unit end number of the second time domain resource.

With reference to the third aspect, in some implementations of the third aspect, the processing unit is further configured to:

determine a transport block size of the first service based on the first time domain resource; and determine sizes of the K sub transport blocks based on the transport block size and the K first subresources.

With reference to the third aspect, in some implementations of the third aspect, the processing unit is further configured to:
determine the sizes of the K sub transport blocks based on the transport block size and a quantity of OFDM symbols included in each of the K first subresources, where a sum of the sizes of the K sub transport blocks equals to the transport block size.

With reference to the third aspect, in some implementations of the third aspect, the processing unit is further configured to:
determine, based on the sizes of the K sub transport blocks and a maximum code block size of an encoder, a quantity of code blocks and code block sizes included in each of the K sub transport blocks.

With reference to the third aspect, in some implementations of the third aspect, the first information may be carried in dynamic control signaling.

For example, the first information may be carried in DCI sent by a network device to a terminal device.

With reference to the third aspect, in some implementations of the third aspect, the second information may be carried in semi-static radio resource control signaling.

For example, the second information may be carried in RRC signaling sent by a network device to a terminal device. According to a fourth aspect, a data transmission apparatus is provided, including:

a transceiver unit, configured to send first information, where the first information is used to indicate a first time domain resource, and the first time domain resource is used to carry a first service, where
the transceiver unit is further configured to send second information, where the second information is used to indicate that a second time domain resource includes N second subresources, and N is an integer greater than or equal to 1; and
a processing unit, configured to determine, based on the first time domain resource and the N second subresources, K first subresources included in the first time domain resource, where K is an integer greater than or equal to 1, where
the transceiver unit is further configured to receive, respectively on the K first subresources, K sub transport blocks included in the first service of a terminal device, where the K sub transport blocks are carried on the corresponding first subresources.

It should be understood that the data transmission apparatus in this embodiment of this application may be a network device.

According to the fourth aspect, the second time domain resource is used to carry the second service, and the first time domain resource and the second time domain resource have an overlapping area in time domain, and have at least an overlapping area in frequency domain.

With reference to the fourth aspect, in some implementations of the fourth aspect, the processing unit is specifically configured to:
determine the K first subresources based on a time domain unit start number of the first time domain resource, a time domain unit end number of the first time domain resource, and time domain unit end numbers of the N second subresources.

With reference to the fourth aspect, in some implementations of the fourth aspect, the $1^{st}$ first subresource in the K first subresources includes resources between the time domain unit start number of the first time domain resource and a time domain unit end number of the $L^{th}$ second subresource, and the $L^{th}$ second subresource is the $1^{st}$ second subresource in a non-empty intersection of the first time domain resource and the N second subresources, where L is an integer less than or equal to N.

With reference to the fourth aspect, in some implementations of the fourth aspect, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource. With reference to the fourth aspect, in some implementations of the fourth aspect, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

With reference to the fourth aspect, in some implementations of the fourth aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and the K-2 first subresources have same time domain unit end numbers as corresponding second subresources in the second subresource set.

With reference to the fourth aspect, in some implementations of the fourth aspect, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

With reference to the fourth aspect, in some implementations of the fourth aspect, the $K^{th}$ first subresource in the K first subresources includes a resource that is in the first time domain resource and that has a time domain unit start number greater than the time domain unit end number of the second time domain resource.

With reference to the fourth aspect, in some implementations of the fourth aspect, the processing unit is further configured to:

> determine a transport block size of the first service based on the first time domain resource; and
> determine sizes of the K sub transport blocks based on the transport block size and the K first subresources.

With reference to the fourth aspect, in some implementations of the fourth aspect, the processing unit is further configured to:

determine the sizes of the K sub transport blocks based on the transport block size and a quantity of OFDM symbols included in each of the K first subresources, where a sum of the sizes of the K sub transport blocks equals to the transport block size.

With reference to the fourth aspect, in some implementations of the fourth aspect, the processing unit is further configured to:

determine, based on the sizes of the K sub transport blocks and a maximum code block size of an encoder, a quantity of code blocks and code block sizes included in each of the K sub transport blocks.

With reference to the fourth aspect, in some implementations of the fourth aspect, the first information may be carried in dynamic control signaling.

For example, the first information may be carried in DCI sent by a network device to a terminal device.

With reference to the fourth aspect, in some implementations of the fourth aspect, the second information may be carried in semi-static radio resource control signaling.

For example, the second information may be carried in RRC signaling sent by a network device to a terminal device. According to a fifth aspect, a communications apparatus is provided and includes a processor. The processor is coupled to a memory, and may be configured to execute an instruction in the memory, to implement the method according to the first aspect and any possible implementation of the first aspect. Optionally, the communications apparatus further includes the memory. Optionally, the communications apparatus further includes a communications interface, and the processor is coupled to the communications interface.

In an implementation, the communications apparatus is a terminal device. When the communications apparatus is a terminal device, the communications interface may be a transceiver or an input/output interface.

In another implementation, the communications apparatus is a chip disposed in a terminal device. When the communications apparatus is the chip disposed in the terminal device, the communications interface may be an input/output interface of the chip, and perform a function of the transceiver unit in the apparatus provided in the third aspect.

Optionally, the transceiver may be a transceiver circuit. Optionally, the input/output interface may be an input/output circuit.

According to a sixth aspect, a communications apparatus is provided and includes a processor. The processor is coupled to a memory, and may be configured to execute an instruction in the memory, to implement the method according to the second aspect and any possible implementation of the second aspect. Optionally, the communications apparatus further includes the memory. Optionally, the communications apparatus further includes a communications interface, and the processor is coupled to the communications interface.

In an implementation, the communications apparatus is a network device. When the communications apparatus is a network device, the communications interface may be a transceiver or an input/output interface.

In another implementation, the communications apparatus is a chip disposed in a network device. When the communications apparatus is the chip disposed in the network device, the communications interface may be an input/output interface of the chip, and perform a function of the transceiver unit in the apparatus provided in the fourth aspect.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to: receive a signal through the input circuit, and transmit a signal through the output circuit, so that the processor performs the method according to the first aspect and the possible implementations of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, and the circuit is used as the input circuit and the output circuit at different moments. Specific implementations of the processor and the various circuits are not limited in the embodiments of this application.

According to an eighth aspect, a processing apparatus is provided, including a processor and a memory. The processor is configured to: read an instruction stored in the memory, receive a signal through a receiver, and transmit a signal through a transmitter, to perform the method according to the first aspect and the possible implementations of the first aspect.

Optionally, there are one or more processors and one or more memories.

Optionally, the memory may be integrated with the processor, or the memory and the processor are separately disposed. In a specific implementation process, the memory may be a non-transitory (non-transitory) memory, for example, a read-only memory (read only memory, ROM). The memory and the processor may be integrated on a same chip, or may be separately disposed on different chips. A type of the memory and a manner of disposing the memory and the processor are not limited in the embodiments of this application.

It should be understood that a related data exchange process, for example, sending first information, may be a process of outputting the first information from the processor, and receiving the first information may be a process of receiving the first information by the processor. Specifically, data output by the processor may be output to the transmitter, and input data received by the processor may be from the receiver. The transmitter and the receiver may be collectively referred to as a transceiver.

The processing apparatus according to the eighth aspect may be a chip. The processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and is implemented by reading software code stored in the memory. The memory may be integrated into the processor, may be located outside the processor, and may exist independently.

According to a ninth aspect, a computer program product is provided as an example for a better understanding. The computer program product includes a computer program (which may also be referred to as code or an instruction). When the computer program is run, a computer is enabled to perform the method according to the first aspect and any possible implementation of the first aspect.

According to a tenth aspect, a computer readable medium is provided as an example for a better understanding. The computer readable medium stores a computer program (which may also be referred to as code or an instruction). When the computer program is run on a computer, the computer is enabled to perform the method according to the first aspect and any possible implementation of the first aspect.

According to an eleventh aspect, a communications system is provided as an example for a better understanding. The system includes the foregoing network device and terminal device.

**BRIEF DESCRIPTION OF DRAWINGS**

FIG. 1 is a schematic diagram of an application scenario according to an embodiment of this application.
FIG. 2 is a schematic diagram of sharing different service resources according to an embodiment of this application;
FIG. 3 is a schematic diagram of a data transmission method according to an embodiment of this application;
FIG. 4 is a schematic diagram of division configuration of a second resource according to an embodiment of this application;
FIG. 5 is a schematic diagram of determining the 1st first subresource according to an embodiment of this application;
FIG. 6 is a schematic diagram of determining first subresources according to an embodiment of this application;
FIG. 7 is another schematic diagram of determining first subresources according to an embodiment of this application;
FIG. 8 is another schematic diagram of determining first subresources according to an embodiment of this application;
FIG. 9 is still another schematic diagram of determining first subresources according to an embodiment of this application;
FIG. 10 is still another schematic diagram of determining first subresources according to an embodiment of this application;
FIG. 11 is still another schematic diagram of determining first subresources according to an embodiment of this application;
FIG. 12 is still another schematic diagram of determining first subresources according to an embodiment of this application;
FIG. 13 is still another schematic diagram of determining first subresources according to an embodiment of this application;
FIG. 14 is a schematic structural diagram of a data transmission apparatus according to an embodiment of this application;
FIG. 15 is another schematic structural diagram of a data transmission apparatus according to an embodiment of this application;
FIG. 16 is still another schematic structural diagram of a data transmission apparatus according to an embodiment of this application; and
FIG. 17 is still another schematic structural diagram of a data transmission apparatus according to an embodiment of this application.

**DESCRIPTION OF EMBODIMENTS**

The following describes technical solutions of this application with reference to the accompanying drawings.

The technical solutions in the embodiments of this application may be applied to various communications systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communications system, and a future 5th generation (5th generation, 5G) system or new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may further be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be a base transceiver station (base transceiver station, BTS) in the global system for mobile communications (global system of mobile communications, GSM) or the code division multiple access (code division multiple access, CDMA) system, may be a NodeB (NodeB, NB) in the wideband code division multiple access (wideband code division multiple access, WCDMA) system, may be an evolved NodeB (evolved NodeB, eNB or eNodeB) in the LTE system, or may be a radio controller in a cloud radio access network (cloud radio access network, CRAN) scenario. Alternatively, the network device may be a relay node, an access point, a vehicle-mounted device, a wearable device, a network device in the future 5G network, a network device in a future evolved PLMN network, or the like. This is not limited in the embodiments of this application.

In the embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, an address book, word processing software, and instant communications software. In addition, a specific structure of an execution body of a method provided in the embodiments is not specifically limited in this application provided that a program that records code for the method provided in the embodiments of this application can be run to perform communication according to the method provided in the embodiments of this application. For example, the execution body of the method provided in the embodiments of this application may be a terminal device, a network device, or a function module that can invoke and execute the program in a terminal device or a network device.

In addition, aspects or features of this application may be implemented as a method, an apparatus, or a product that uses standard programming and/or engineering technologies. The term "product" used in this application covers a computer program that can be accessed from any computer readable component, carrier or medium. For example, the computer readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry an instruction and/or data.

For ease of understanding, before the data transmission method and apparatus in this application are described, the following describes related terms and principles in the embodiments of this application.

1. Three scenarios in the fifth generation mobile communications system:

In 3GPP, the 5th generation (5th generation, 5G) mobile communications technology includes three application scenarios: enhanced mobile broadband (enhanced mobile broadband, eMBB), ultra-reliable low latency communication (ultra-reliable low latency communication, URLLC), and massive machine-type communication (massive machine-type communication, mMTC).

In an enhanced mobile broadband technology, a cell rate is higher, and a large bandwidth (supporting 100 MHz), MaMIMO (MaMIMO), and coding LDPC and pollor with higher efficiency are used. In a massive machine-type communication technology, a cell support more users and power consumption is lower. In the ultra-reliable low latency communication, a cell can support a lower end-to-end latency and higher reliability, and is used to support communication between machines and implement precise high-speed control.

Data packet sizes, traffic models (traffic model), and the like are not exactly the same in services of different scenarios. An eMBB service is characterized by a larger data packet and insensitivity to a data transmission latency. Compared with the eMBB service, a URLLC service is characterized by a smaller data packet and an occasional service, and further requires ultra-reliable low latency data transmission.

2. Transmission time interval (transmission time interval, TTI):

The TTI represents a time resource for one data transmission, and is also a minimum scheduling period of a network device. For example, a TTI length is defined as 1 ms in a long term evolution (long term evolution, LTE) system. Various possible TTI lengths have been proposed in discussion about the fifth generation mobile communications technology in the 3GPP, and may include, for example, a subframe (subframe), a slot (Slot), and a mini-slot (Mini-Slot). In addition, TTI bundling (TTI bundling) may be further used. Because 5G includes three application scenarios: enhanced mobile broadband, ultra-reliable low latency communication, and massive machine-type communication, different TTI lengths may be used in different application scenarios.

For example, a TTI of a typical eMBB service may be a subframe (subframe) or a slot slot. To reduce a latency, a URLLC service may use a slot or a mini-slot. To enhance coverage, an mMTC service may use TTI bundling or the like.

3. Transport block size (transmit block size, TBS):

A data block transmitted within a TTI is referred to as a transport block. A quantity of bits included in each transport block is referred to as a transport block size TBS. In an LTE/NR system, several TBS tables are defined, and correspond to different quantities of spatial layers (there is a dedicated TBS table for some special downlink control information). A terminal receives, from a network device, a modulation and coding scheme (modulation and coding, MCS) index and a physical resource block (physical resource block, PRB) index that are used for uplink or downlink transmission, searches for a corresponding TBS index based on the MCS index allocated by the network device, and then obtains a determined TBS value from a corresponding TBS table or calculates a TBS value based on information such as the TBS index, a quantity of PRBs, a quantity of spatial layers, a quantity of OFDM symbols, and possible reference signal overheads.

4. Code block (code block, CB):

In an actual communications system, channel coding is performed on a transport block to implement an error correction function and resist interference and noise. A to-be-encoded transport block may be referred to as a code block CB. Limited by a maximum code block size corresponding to a specific encoder, to obtain an optimal coding gain for transport blocks of different sizes in a system, code chunking may be performed on a transport block (transmit block, TB) that exceeds a specific size, to obtain a plurality of code blocks (code block, CB) that meets the maximum code block size. Channel coding is performed on each CB.

5. Successive interference cancellation (successive interference cancellation, SIC):

A basic principle of the SIC is to gradually reduce interference from a user with highest signal power. An SIC detector performs data decision on a plurality of users one by one in received signals. If data decision is performed on a user, multiple access interference (MAI) caused by a signal of the user is cancelled at the same time. Operations are performed in an order of signal power. An operation is first performed on a signal with higher power. In this way, operations are cyclically performed until all multiple access interference is cancelled.

The SIC detector detects only one signal at each layer. Therefore, K-layer decision is required for K users. Operation orders on the users are arranged based on power of the users. A signal with higher power is preferentially processed because a user with stronger interference is more likely to be detected. Each layer outputs a received signal obtained after data decision of a user with highest power is performed and MAI caused by the user is removed. In this way, the multiple access interference can be minimized, and a weaker signal corresponds to a greater gain, to greatly improve detection reliability. In the multi-layer structure, an output signal of an upper layer is used as an input signal of a lower layer, and cyclic operations "detection, estimation, detection..." are repeated, to gradually reduce multiple access interference in received signals.

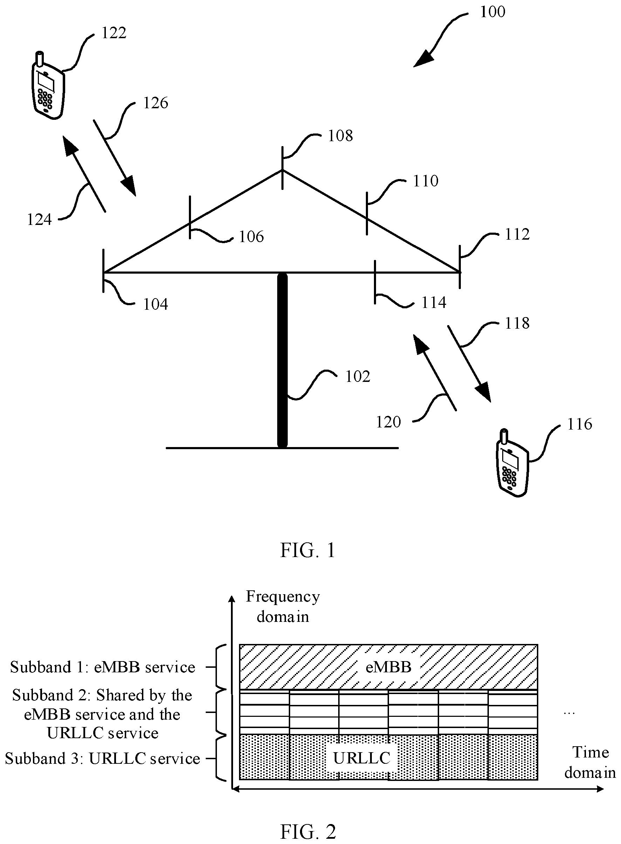

FIG. 1 is a schematic diagram of a system 100 to which a communication method according to an embodiment of this application is applicable. As shown in FIG. 1, the system 100 includes an access network device 102. The access network device 102 may include one or more antennas, for example, antennas 104, 106, 108, 110, 112, and 114. In addition, the access network device 102 may additionally include a transmitter chain and a receiver chain. A person of ordinary skill in the art can understand that the transmitter chain and the receiver chain may include a plurality of components (for example, a processor, a modulator, a multiplexer, a demodulator, a demultiplexer, or an antenna) related to signal sending and receiving.

The access network device 102 may communicate with a plurality of terminal devices (for example, a terminal device 116 and a terminal device 122). However, it may be understood that the access network device 102 may communicate with any quantity of terminal devices that are similar to the terminal device 116 or the terminal device 122. The terminal devices 116 and 122 each may be, for example, a cellular phone, a smartphone, a portable computer, a handheld communications device, a handheld computing device, a satellite radio apparatus, a global positioning system, a PDA, and/or any other proper device used for communication in the wireless communications system 100. As shown in FIG. 1, the terminal device 116 communicates with the antennas 112 and 114. The antennas 112 and 114 send information to the terminal device 116 over a forward link (also referred to as a downlink) 118, and receive information from the terminal device 116 over a reverse link (also referred to as an uplink) 120. In addition, the terminal device 122 communicates with the antennas 104 and 106. The antennas 104 and 106 send information to the terminal device 122 over a forward link 124, and receive information from the terminal device 122 over a reverse link 126.

For example, in a frequency division duplex (frequency division duplex, FDD) system, the forward link 118 and the reverse link 120 may use different frequency bands, and the forward link 124 and the reverse link 126 may use different frequency bands.

For another example, in a time division duplex (time division duplex, TDD) system and a full duplex (full duplex) system, the forward link 118 and the reverse link 120 may use a same frequency band, and the forward link 124 and the reverse link 126 may use a same frequency band.

Each antenna (or antenna group including a plurality of antennas) and/or area designed for communication are/is referred to as a sector of the access network device 102. For example, an antenna group may be designed to communicate with a terminal device in a sector within coverage of the access network device 102. The access network device may send signals to all terminal devices in the corresponding sector through a single antenna or a multi-antenna transmit diversity. In a process in which the access network device 102 communicates with the terminal devices 116 and 122 respectively over the forward links 118 and 124, a transmit antenna of the access network device 102 may improve signal-to-noise ratios of the forward links 118 and 124 through beamforming. In addition, interference to a mobile device in a neighboring cell when the access network device 102 sends signals through beamforming to the terminal devices 116 and 122 that are randomly scattered in the related coverage is less than that in a manner in which an access network device sends, through a single antenna or a multi-antenna transmit diversity, signals to all terminal devices served by the access network device.

In a given time, the access network device 102, the terminal device 116, or the terminal device 122 may be a wireless communications sending apparatus and/or a wireless communications receiving apparatus. When sending data, the wireless communications sending apparatus may encode data for transmission. Specifically, the wireless communications sending apparatus may obtain (for example, generate, receive from another communications apparatus, or store in a memory) a particular quantity of data bits to be sent on a channel to the wireless communications receiving apparatus. The data bit may be included in a transport block (or a plurality of transport blocks) of the data, and the transport block may be segmented to generate a plurality of code blocks.

In addition, the communications system 100 may be a PLMN network, a D2D network, an M2M network, an IoT network, or another network. FIG. 1 is merely a simplified schematic diagram used as an example. The network may further include another access network device, which is not shown in FIG. 1.

In the prior art, to improve spectrum resource utilization, when an eMBB service and a URLLC service coexist in a system, it may be considered that the eMBB service and the URLLC service share a same time-frequency resource. Currently, in downlink transmission, dynamic resource sharing and multiplex transmission of the eMBB service and the URLLC service on a downlink resource is supported. To meet an ultra-reliable low latency requirement of the URLLC service, when a downlink URLLC service arrives, a gNB may directly occupy a resource of an eMBB service to transmit the URLLC service. The gNB notifies, by using a PI (pre-emption indication), eMBB UE of the resource occupied by the URLLC service and a retransmission number of the punctured eMBB service. In resource-sharing transmission of an uplink eMBB service and a URLLC service, currently, a research that a dynamic resource sharing manner similar to that in downlink transmission in which notification is performed by using the PI may be applied to the resource-sharing transmission of the uplink eMBB service and the URLLC service has been carried out. However, in this solution, for uplink transmission, a URLLC user needs to send a scheduling request (scheduling request, SR) to a network device (gNB), and wait for the gNB to send an uplink grant (UL grant). The network device obtains a data transmission request of the URLLC user in time and sends a PI to indicate the eMBB user to puncture (puncture) a service of the eMBB user. In this way, for the eMBB service, data transmission efficiency is reduced, and for the URLLC service, both the SR used to request a transmission resource from the network device and the grant delivered by the network device increase a URLLC latency.

In the prior art, power control may also be used to adjust power of the URLLC service and power of the eMBB service to implement resource-sharing transmission of the URLLC service and the eMBB service.

For example, transmission of the URLLC service may be ensured by limiting the power of the eMBB service. However, in this solution, only power allocation of the URLLC service and the eMBB service is described, and there is no detailed solution for decoding at a receive end. In general, in a power allocation-based manner, transmit power of the URLLC service needs to meet a demodulation threshold of the URLLC service when there is eMBB transmission interference. Limited by this requirement, power control is used in very limited application scenarios, and performance of the eMBB service whose power is limited is greatly compromised.

To reduce requirements for scheduling signaling and power allocation on the network side during resource-sharing transmission of different services, a SIC technology based on an advanced receiver can well support robust transmission of shared signals. For example, a bit-level successive interference cancellation (successive interference cancellation, SIC) or parallel interference cancellation (parallel interference cancellation, PIC) receiver can well resolve a problem of interference between transmission on a plurality of channels. In addition, to implement optimal joint detection between two channels of superposed signals, bit-level SIC needs to be implemented. All code blocks of the two channels of superposed data need to be received at a same moment, so that the bit-level SIC can be implemented.

However, because eMBB and URLLC have different latency transmission requirements, time domain transmission resources of different services are different. Likewise, when a URLLC code block is received, an eMBB code block is not completely received, and the bit-level SIC cannot be implemented.

In view of this, the embodiments of this application provide a data transmission method and apparatus, so that when different services (for example, the eMBB service and the URLLC service) share a same time domain resource to perform transmission, it can be ensured that SIC detection can be jointly performed on transport blocks or code blocks of different services on a time domain resource, to avoid excessive signaling overheads in a system. This improves URLLC detection performance, and also avoids a performance loss of the eMBB service, to greatly improve resource-sharing transmission performance of the system.

FIG. 2 is a schematic diagram of sharing a resource by a first service (an eMBB service) and a second service (a URLLC service) according to an embodiment of this application.

As shown in FIG. 2, frequency domain resources include a subband 1, a subband 2, and a subband 3. The subband 1 is used to transmit data of the eMBB service, and the subband 3 is used to transmit data of the URLLC service. The subband 2 may be shared to transmit the eMBB service and the URLLC service. In other words, both the eMBB service and the URLLC service in the subband 2 occupy at least some same time-frequency resources.

It should be noted that the embodiments of this application may be applied to a 5G NR system, or may be applied to another communications system provided that there is a scenario in which a plurality of services share a time domain resource in the communications system. As shown in FIG. 2, different services share a same time domain resource. This application is also applicable to another scenario in which different services share a resource.

In the embodiments of this application, in 5G, data of the eMBB service and data of the URLLC service are usually transmitted by using different TTI sizes. For ease of understanding, in this application, "the data of the eMBB service" is referred to as "eMBB data" or the first service for short, and "the data of the URLLC service" is referred to as "URLLC data" or the second service for short.

In the embodiments of this application, a data sending device may transmit the eMBB data and/or the URLLC data. Because a data packet of the URLLC data is usually smaller than a data packet of the eMBB data, a TTI of the eMBB is usually greater than or equal to a TTI of the URLLC.

In the embodiments of this application, a data block transmitted by a data sending device within one TTI is referred to as a transport block (transmit block, TB), and a size of the transport block is referred to as a transport block size (transmit block size, TBS). A data block obtained by dividing one transport block within one TTI based on a smaller time domain resource granularity is referred to as a sub transport block (Sub transmit block, STB). A sum of sizes of all sub transport blocks within one TTI is equal to one transport block size. A data block determined by a transport block or a sub transport block based on a maximum code block size (maximum code block size) for channel coding may be referred to as a code block (code block, CB).

It should be understood that before sending data, the data sending device (for example, a terminal device) may learn of a modulation and coding scheme (modulation and coding, MCS) index and a pre-allocated physical resource block index of a to-be-transmitted transport block, may find a corresponding TBS index based on the MCS index, obtain a TBS table corresponding to the TBS index, find a TBS from the TBS table based on a quantity of physical resource blocks, and determine the to-be-transmitted TB based on the TBS. Alternatively, the data sending device may determine a TB S through calculation based on information such as a quantity of physical resource blocks carrying a transport block, a quantity of OFDM symbols, a quantity of spatial layers, possible reference signal overheads, and an MCS, determine a quantity of CBs and sizes of CBs based on the TBS of the TB and a maximum code block size used for channel coding, and then map the CBs to a physical resource corresponding to the physical resource block index. Alternatively, the data sending device determines a plurality of sub transport blocks based on a TBS of the TB and information about a plurality of time domain subresources, determines a quantity of CBs and sizes of the CBs based on the sub transport blocks and a maximum code block size used for channel coding, and then maps one or more CBs included in one sub transport block to a time domain subresource.

According to the data transmission method in the embodiments of this application, the terminal device can perform, based on a time domain resource indicated by second information (for example, based on the second service, namely, the URLLC service), chunking and resource mapping on a data block that is of the first service (for example, the eMBB service) and that is carried on a time domain resource indicated by first information, including allocating K first time domain subresources (namely, first subresources) included in the time domain resource (a first time domain resource) of the first service, K sub transport blocks included in the data block of the first service, and each transport block size. A transport block size corresponding to the data block of the first service is determined based on time domain resource information of the first service, and the K sub transport blocks and each transport block size are jointly determined based on both allocation information of the first time domain resource and indication information of the second resource, so that scheduling signaling that is sent to the network device for sharing transmission resources by different services is reduced, and signaling overheads in a system are reduced.

In addition, when the time domain resource information of the first service is allocated, it is ensured that a time domain unit end number of any first subresource included in the first time domain resource is the same as a time domain unit end number of a second time domain resource. It is ensured that when different service data occupies the first subresource and the second time resource, joint detection can be performed by using an advanced receiver, to improve performance.

In the embodiments of this application, the terminal device may determine a first subresource, so that a time domain unit end number of the first subresource is the same as the time domain unit end number of the second resource or the time domain unit end number of the first subresource is less than an end number of a corresponding second subresource. It should be understood that the first subresource may be used to transmit the data of the first service, and the second time domain resource may be used to transmit data of the second service, so that code blocks of services with different latency requirements have same transmission resource boundaries. This ensures joint detection between the service data. In this way, scheduling signaling that is sent to the network device for sharing transmission resources by different services is reduced, and signaling overheads in the system are reduced.

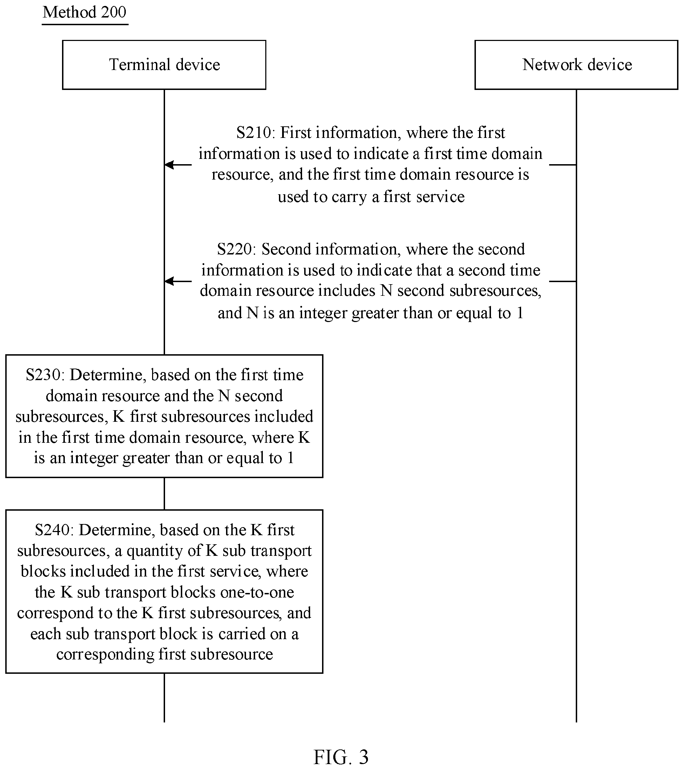

The following describes the data transmission method in the embodiments of this application with reference to FIG. 3 to FIG. 14.

FIG. 3 is a schematic diagram of a data transmission method 200 according to an embodiment of this application. A terminal device may be any terminal device in FIG. 1, and a network device may be the network device shown in FIG. 1.

S210: The network device sends first information to the terminal device, where the first information is used to indicate a first time domain resource, and the first time domain resource is used to carry a first service.

S220: The network device sends second information, where the second information is used to indicate that a second time domain resource includes N second subresources, and N is an integer greater than or equal to 1.

It should be noted that, in this embodiment of this application, the second time domain resource is used to carry the second service, and the first time domain resource and the second time domain resource have an overlapping area in time domain, and have at least an overlapping area in frequency domain.

It should be understood that the data transmission method in this embodiment of this application may be applied to both an uplink data transmission scenario and a downlink data transmission scenario. In the uplink data transmission scenario, a data sending device may be the terminal device. In the downlink data transmission scenario, a data sending device may be the network device.

It should be noted that in this embodiment of this application, the first service and the second service may be transmitted by a same data sending device (for example, the terminal device), or may be transmitted by different sending devices.

It should be further understood that when the first service and the second service are sent by different terminal devices, a terminal device of the second service does not need to obtain the second information, and division configuration information of the second time domain resource is sent by the network device to a terminal device of the first service. The terminal device that transmits the first service may divide the first time domain resource into K first subresources based on the second information.

Optionally, in this embodiment of this application, the first information may be carried in dynamic control signaling. For example, the first information may be carried in DCI sent by the network device to the terminal device. Optionally, in this embodiment of this application, the second information may be carried in semi-static radio resource control signaling. For example, the second information may be carried in RRC signaling sent by the network device to the terminal device.

In this embodiment of this application, the network device sends the second information to the terminal device, where the second information may include N indication information sets, the N indication information sets one-to-one correspond to the N second subresources, each indication information set includes at least one same index value, and N is an integer greater than or equal to 1.

For example, the division configuration information used for the second time domain resource that is sent by the network device to the terminal device is a group of index (index) mapping information.

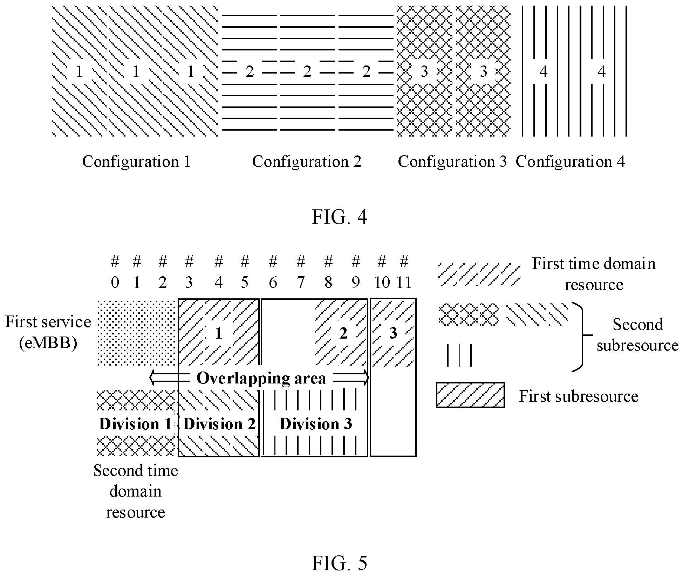

As shown in FIG. 4, a total quantity of symbols in the second time domain resource is $N_{S,TU}$, and the second time domain resource is divided into $C_{TU}$ second subresources. Each second subresource corresponds to a different configuration (configuration) of the second service, a quantity of symbols in each second subresource is $N_{S,C_{TU,i}}$, and a total quantity of symbols in the second time domain resource is $N_{S,TU} = \Sigma\ N_{S,C_{TU,i}}$.

As shown in FIG. 4, the second time domain resource includes 10 symbols, for example, symbols #0 to #9. Configuration information in each second subresource is a group of same indexes, same indexes represent a same second subresource, and different indexes represent different second subresources.

For example, index mapping information of the symbols #0 to #2 in FIG. 4 is 1, and the symbols are grouped into the 1st second subresource. Index mapping information of the symbols #3 to #5 is 2, and the symbols are grouped into the 2nd second subresource. Index mapping information of the symbols #6 and #7 is 3, and the symbols are grouped into the 3rd second subresource. Index mapping information of the symbols #8 and #9 is 4, and the symbols are grouped into the 4th second subresource.

It should be understood that different second subresources on the second time domain resource may represent different configuration information corresponding to the second service. In other words, a plurality of different second services may be transmitted on the second resource.

It should be understood that a data sending device may transmit data of the first service (for example, eMBB data) and/or data of the second service (for example, URLLC data). A data packet of the data of the second service is usually smaller than a data packet of the data of the first service. Therefore, the first time domain resource of the first service may be greater than or equal to any second subresource included in the second time domain resource indicated by the second information.

S230: The terminal device determines, based on the first time domain resource and the N second subresources, the K first subresources included in the first time domain resource, where K is an integer greater than or equal to 1.

In an example, the terminal device determines, based on end positions of the N second subresources, the K first subresources included in the first time domain resource. Specifically, the K first subresources included in the first time domain resource are determined based on end positions of all second subresources located between a start position and an end position of the first time domain resource. In this embodiment, each of the K first subresources except the 1st first subresource and the last first subresource has a start position that is located behind a former end position of end positions of two adjacent second subresources, and has an end position that is located before a latter end position of the end positions of the two adjacent second subresources or that is the same as the end position of the latter end position. All resources that are in the first time domain resource and that are located before an end position of the 1st second subresource (including the end position of the 1st second subresource) between the start position and the end position of the first time domain resource are the 1st first subresource. All resources that are in the first time domain resource and that are located behind an end position of the last second subresource between the start position and the end position of the first time domain resource are the Kth first subresource. For example, it is assumed that the symbols #1 to #8 in FIG. 4 are the first time domain resource, the second time domain resource includes four second subresources, and end positions of the four second subresources are the symbol #2, the symbol #5, the symbol #7, and the symbol #9. End positions of second subresources between the start position and the end position of the first time domain resource are the symbol #2, the symbol #5, and the symbol #7. Finally determined first subresources are the 1st first subresource including the symbol #1 and the symbol #2, the 2nd first subresource including the symbols #3 to #5, the 3rd first resource including the symbol #6 and the symbol #7, and the 4th first subresource including the symbol #8.

In a special case, if there is an end position of only one second resource between the start position and the end position of the first time domain resource, all first time domain resources located before the end position (including the end position) of the second resource are the 1st first subresource, and all first time domain resources located behind the end position of the second resource are the 2nd first subresource.

The following describes, with reference to FIG. 5 to FIG. 13, a method for determining the K first subresources included in the first time domain resource in this embodiment of this application.

It is assumed that the first time domain resource may be a first transmission time interval TTI, and the first time domain resource includes M OFDM symbols (which may be generally referred to as time domain units), which are specifically a number set is $Set_1=\{s_1, s_2, ..., s_m, ..., s_M\}$, where $1 \leq m \leq M$, $s_m$ represents a number corresponding to the $m^{th}$ OFDM symbol, and number values in the set may be consecutive or inconsecutive. Without loss of generality, an OFDM number in the set increases as a subscript value increases.

The second time domain resource includes the N second subresources. For example, the second subresources may be represented as $Set_2=\{Set_{2,1}, ..., Set_{2,n}, ..., Set_{2,N}\}$, where $1 \leq n \leq N$. The $n^{th}$ second subresource includes $P_n$ OFDM numbers, which are specifically a number set $Set_{2,n}=\{s_{1,n}, s_{2,n}, ..., s_{p,n}, ..., s_{P,n}\}$, where $1 \leq p \leq P$, $s_{p,n}$ represents a number corresponding to the $p^{th}$ OFDM symbol in the $n^{th}$ second subresource, and number values in the set may be consecutive. Without loss of generality, an OFDM number value increases as a number n of a second subresource, a subscript value, and an OFDM subscript in a subresource increase, and a number corresponding to an OFDM symbol with a larger subresource number is greater than a number corresponding to an OFDM symbol with a smaller subresource number. The determining, based on the first time domain resource and the N second subresources, K first subresources included in the first time domain resource includes:

determining the K first subresources based on a time domain unit start number of the first time domain resource, a time domain unit end number of the first time domain resource, and time domain unit end numbers of the N second subresources.

It should be noted that the determining the K first subresources based on the time domain unit end numbers of the N second subresources includes but is not limited to the following two possibilities:

For example, a time domain unit number may be an index of a symbol included in a time domain resource.

In a first implementation, the time domain unit end number included in the first time domain resource is greater than a time domain unit end number included in the second time domain resource, that is, the time domain unit end number of the first time domain resource is later than the time domain unit end number of the second time domain resource. In this case, the first time domain resource is divided into the K first subresources based on a time domain unit number corresponding to the end number of each of the N second subresources. The first (K-1) first subresources include a non-empty intersection of the first time domain resource and the second time domain resource, and the K$^{th}$ first subresource includes all time domain units that are in the first time domain resource and that have time domain unit numbers greater than the time domain unit end number of the second time domain resource.

In a second possible implementation, the time domain unit end number included in the first time domain resource is less than or equal to a time domain unit end number included in the second time domain resource, that is, the time domain unit end number of the first time domain resource is earlier than or the same as the time domain unit end number of the second time domain resource. It is assumed that the second time domain resource corresponds to 10 time domain units whose time domain unit numbers are #0 to #9, and includes three second subresources. The time domain unit numbers #0 to #2 correspond to the 1$^{st}$ second subresource, the time domain unit numbers #3 to #5 correspond to the 2$^{nd}$ second subresource, and the time domain unit numbers #6 to #9 correspond to the 3$^{rd}$ second subresource. The first time domain resource corresponds to six symbols whose time domain unit numbers are #0 to #5. In this case, the first time domain resource is divided into two first subresources based on time domain unit end numbers of the first two subresources in the three second subresources, that is, based on the corresponding time domain unit numbers #2 and #5.

Optionally, the 1$^{st}$ first subresource in the K first subresources includes resources from the start number of the first time domain resource to a time domain unit end number of the L$^{th}$ second subresource, and L is a number (for example, an integer not greater than N) corresponding to the 1$^{st}$ second subresource in the non-empty intersection of the first time domain resource and the second time domain resource.

It should be understood that the L$^{th}$ subresource is the 1$^{st}$ second resource in the non-empty intersection of a first subresource set and the N subresources. As shown in FIG. 5, the L$^{th}$ second subresource may be the 2$^{nd}$ second subresource.

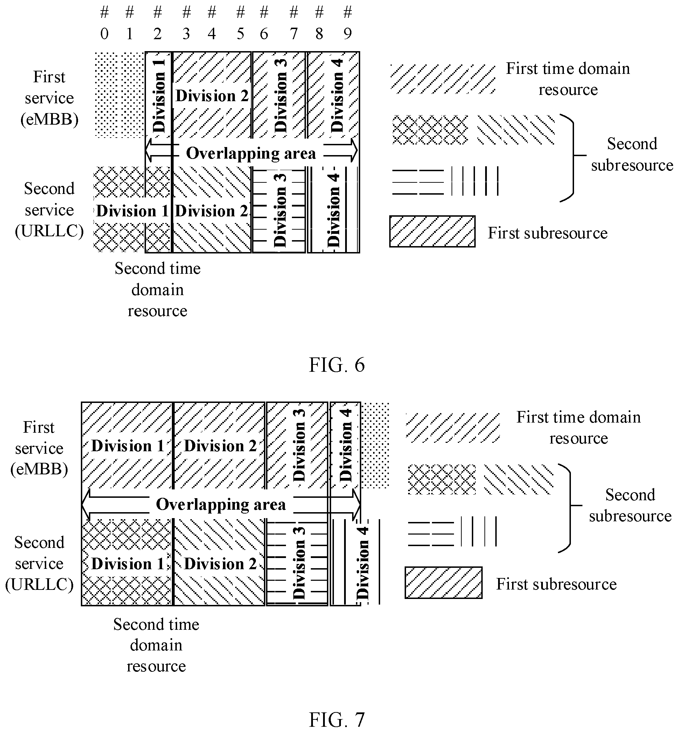

For example, the 1$^{st}$ first subresource may be considered as a division 1 in the first time domain resource in FIG. 6 to FIG. 11. A start number of the division 1 is the time domain unit start number of the first time domain resource, and an end number of the division 1 is an end number of the 1$^{st}$ second subresource (that is, a division 1).

For example, in FIG. 6, a time domain unit number corresponding to a start resource of the first time domain resource is #2, and a time domain unit number corresponding to the end number of the 1$^{st}$ second subresource is #2. Therefore, the 1$^{st}$ first subresource is #2.

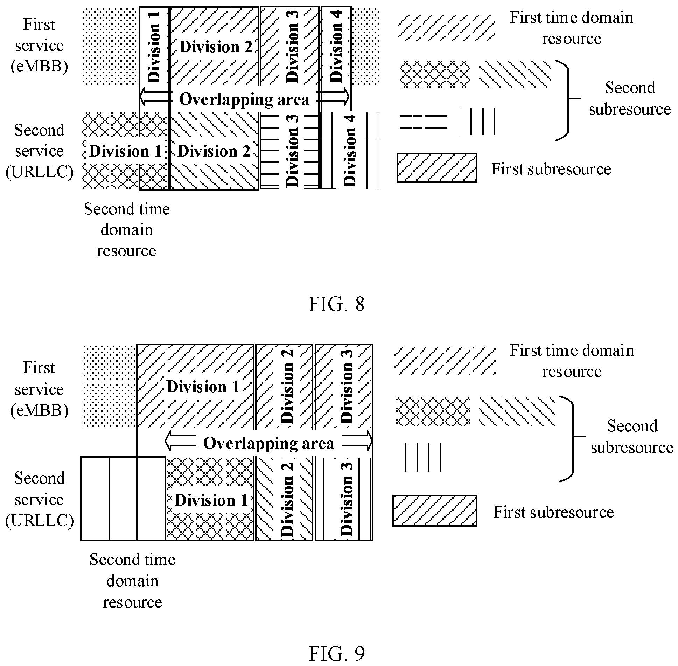

For example, in FIG. 9, a time domain unit number corresponding to a start resource of the first time domain resource is #2, and a time domain unit number corresponding to the end number of the 1$^{st}$ second subresource is #5. Therefore, the 1$^{st}$ first subresource is {#2 to #5}.

Optionally, when the time domain unit end number of the first time domain resource is less than or equal to the time domain unit end number of the second time domain resource, and the first time domain resource includes resources with consecutive time domain unit numbers, the first subresource set is a non-empty intersection of the first time domain resource and a second subresource set, where the first subresource set is a resource set including K-1 first subresources other than the 1$^{st}$ first subresource in the K first subresources, the second subresource set is a resource set including the (L+1)$^{th}$ second subresource to the N$^{th}$ second subresource in the N second subresources, the K-1 first subresources have same time domain unit end numbers as corresponding second subresources in the second subresource set, and a time domain unit end number of the K$^{th}$ first subresource is less than or equal to a time domain unit end number of a corresponding second subresource.

It should be understood that, as shown in FIG. 6, the L$^{th}$ second subresource may be the 1$^{st}$ second subresource, that is, may be a second subresource corresponding to the division 1.

For example, as shown in FIG. 6, the first subresource set may include a set including eight symbols corresponding to symbol numbers #2 to #9, and the second subresource set may include a set including resources corresponding to a division 2, a division 3, and a division 4, that is, a set including eight symbols corresponding to symbol numbers #2 to #9.

With reference to the schematic diagrams shown in FIG. 6 to FIG. 10, a method for determining the first subresources is described in detail.

For example, in FIG. 6 to FIG. 8, $s_1 \geq s_{1,1}$ and $s_M \leq s_{P,N}$. To be specific, the first time domain resource may be a subset of the second time domain resource. In other words, an OFDM symbol set $Set_1$ corresponding to the first time domain resource is a subset of an OFDM symbol set $Set_2$ including the N second subresource, and the second time domain resource includes consecutive symbol numbers. It is determined that the first time domain resource includes $K \leq N$ first subresources. For example, a set including the K first subresources is $Set_i = \{ Set_{1,1}, ..., Set_{1,k}, ..., Set_{1,K} \}$, and the $k^{th}$ ($1 \leq k \leq K$) first subresource $Set_{1,k}$ includes $Q_k$ OFDM numbers, which may be specifically a number set $Set_{1,k} = \{ s_{1,k}, s_{2,k}, ..., s_{q,k}, ..., s_{Q,k} \}$. Without loss of generality, the K first subresources are a non-empty intersection of the first time domain resource and the N second subresources. For example, the $k^{th}$ ($1 \leq k \leq K$) first subresource $Set_{1,k}$ is a non-empty intersection of $Set_1$ and a second subresource $Set_{2,n}$.

For example, $Set_1$ is a set including consecutive OFDM symbol numbers. When k=1, an OFDM number set included in the $1^{st}$ first subresource may be $Set_{1,1} = \{ s_1, ..., s_{P,n} \}$, and is an intersection set of $Set_1$ and $Set_{2,n}$, where $s_1$ represents a smallest OFDM number (that is, a start number) included in the first time domain resource, $s_{P,n}$ represents a largest OFDM number (that is, an end number) included in the $n^{th}$ second subresource, n is a number of the $1^{st}$ second subresource in the non-empty intersection of the N second subresources and the first time domain resource, and the smallest OFDM number included in the first subresource is greater than or equal to a smallest OFDM number included in the $1^{st}$ second subresource, that is, $s_1 \geq s_{1,1}$.

For example, as shown in FIG. 6, the first service is carried on the first time domain resource including eight symbols numbered #2 to #9, N second services are carried on the second time domain resource including 10 symbols numbered #0 to #9, and two symbols numbered #0 and #1 indicate resources that are not used by the first service. Therefore, the first time domain resource is a subset of the second time domain resource. The terminal device may determine, based on the first information configured by the network device, that the second time domain resource is divided into four second subresources, and may determine, based on the $1^{st}$ second subresource and the first time domain resource, that a start symbol of the $1^{st}$ first subresource is $s_1=2$, and an end symbol of the $1^{st}$ first subresource is $s_{P,1}=2$. In other words, an OFDM number set included in the $1^{st}$ first subresource is an intersection set of the division 1 of the first time domain resource and the division 1 of the second time domain resource. For example, the intersection set of the division 1 of the first time domain resource and the division 1 of the second time domain resource may be {#2}.

For example, as shown in FIG. 7, the first service is carried on the first time domain resource including nine symbols numbered #0 to #8, and N second services are carried on the second time domain resource including 10 symbols numbered #0 to #9. Therefore, the first time domain resource is a subset of the second time domain resource. The terminal device may determine, based on the first information configured by the network device, that the second time domain resource is divided into four second subresources, and may determine, based on the $1^{st}$ second subresource and the first time domain resource, that a start symbol of the $1^{st}$ first subresource is $s_1=0$, and an end number of the $1^{st}$ first subresource is $s_{P,1}=2$. In other words, an OFDM time domain unit number set included in the $1^{st}$ first subresource is an intersection set of a division 1 of the first time domain resource and a division 1 of the second time domain resource, and may be {#0, #1, #2}.

For example, as shown in FIG. 8, the first service is carried on the first time domain resource including seven symbols numbered #2 to #8, and N second services are carried on the second time domain resource including 10 symbols numbered #0 to #9. Therefore, the first time domain resource is a subset of the second time domain resource. The terminal device may determine, based on the first information configured by the network device, that the second time domain resource includes four second subresources and each subresource may carry a corresponding second service, and may determine, based on the $1^{st}$ second subresource and the first time domain resource, that a start symbol of the $1^{st}$ first subresource is $s_1=2$, and an end number of the $1^{st}$ first subresource is $s_{P,1}=2$. In other words, an OFDM time domain unit number set included in the $1^{st}$ first subresource is an intersection set of a division 1 of the first time domain resource and a division 1 of the second time domain resource, and may be {#2}.

For example, in the schematic diagram shown in FIG. 9, $s_1 < s_{1,1}$ and $s_M \leq s_{P,N}$, and some resources in the first time domain resource may not be a subset of the second time domain resource. In other words, the $1^{st}$ OFDM symbol number included in the first time domain resource may be less than a smallest OFDM number included in the $1^{st}$ second time domain resource. For example, the start number of the first time domain resource is greater than the start number of the second time domain resource. As shown in FIG. 9, the start symbol included in the first time domain resource is a symbol #2, and the start symbol included in the second time domain resource is a symbol #3.

It is determined that the first subresources are $Set_1 = \{ Set_{1,1}, ..., Set_{1,k}, ..., Set_{1,K} \}$, and a set $Set_{1,k}$ of the $k^{th}$ ($1 \leq k \leq K$) first subresource includes $Q_k$ OFDM numbers, which may be specifically a number set $Set_{1,k} = \{ s_{1,k}, s_{2,k}, ..., s_{q,k}, ..., s_{Q,k} \}$. Without loss of generality, a set $Set_{2,k}$ included in the $k^{th}$ ($2 \leq k \leq K$) first subresource is a non-empty intersection of Set₁ and a set Set$_{2,n}$ (1≤n) included in the second time domain resource. When k=1, in OFDM symbols included in the 1st first subresource, a start number is the start number of the first time domain resource, and an end number is the end number of the L$^{th}$ second subresource, where L is a number of the 1st second subresource that is in a non-empty intersection of the N second subresources and the first time domain resource. As shown in FIG. 9, a first subset is {#2}, and a second subset is {#3 to #5}.

As shown in FIG. 9, an OFDM number set {s₁, ..., s$_{Q,1}$} included in the 1st first subresource may be {#2, #3, #4, #5}. The k$^{th}$ (2≤k≤K) first subresource includes Q OFDM numbers, which are specifically a number set {s$_{1,k}$, s$_{2,k}$, ..., s$_{q,k}$, ..., s$_{Q,k}$}, and

$$\begin{cases} s_{1,k} \leq s_{1,n} \\ s_{Q,k} \leq s_{P,n} \\ s_{Q,k-1} \leq s_{1,k} \end{cases}$$

is met, where

s$_{1,n}$ represents a smallest OFDM number included in the n$^{th}$ second subresource, represents a largest OFDM number included in the n$^{th}$ second subresource, s$_{Q,k}$ represents a largest OFDM number corresponding to the k$^{th}$ first subresource, and s$_{1,k}$ represents a smallest OFDM number corresponding to the k$^{th}$ first subresource. In addition, OFDM numbers corresponding to the K first subresources may be cascade arranged in an ascending order of k, and an obtained new OFDM symbol number set may be completely consistent with {s₁, s₂, ..., s$_m$, ..., s$_N$}.

It should be noted that a largest OFDM number corresponding to (k-1)$^{th}$ first subresource is less than a smallest OFDM number corresponding to the k$^{th}$ first subresource.

For example, as shown in FIG. 9, a start number included in the 2nd first subresource is a symbol #6, and the 2nd second subresources included in the second time domain resource are #6 and #7, that is, n$_{1,k}$≤n$_{1,n}$ is met. The start number of the 2nd first subresource is the symbol #6, that is, n$_{Q,k}$≤n$_{P,n}$ is met. In addition, a largest OFDM number corresponding to the 2nd first subresource is less than a smallest OFDM number corresponding to the 3rd first subresource. Optionally, when the time domain unit end number of the first time domain resource is greater than the time domain unit end number of the second time domain resource, and the first time domain resource includes resources with consecutive time domain unit numbers, the first subresource set is a non-empty intersection of the first time domain resource and a second subresource set, where the first subresource set is a resource set including K-2 first subresources other than the 1st first subresource and the K$^{th}$ first subresource in the K first subresources, the second subresource set is a resource set including the (L+1)$^{th}$ second subresource to the N$^{th}$ second subresource in the N second subresources, and the K-2 first subresources have same time domain unit end numbers as corresponding second subresources in the second subresource set.

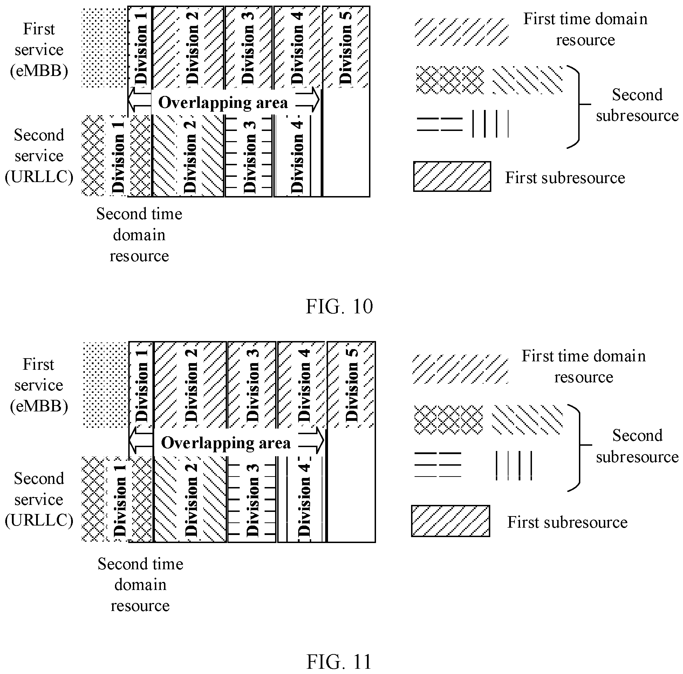

For example, as shown in FIG. 10, the first subresource set does not include the 1st first subresource (a division 1) and the K$^{th}$ first subresource (a division 5). To be specific, the first subresource set is a set including resources corresponding to a division 2, a division 3, and a division 4, that is, a set including seven symbols corresponding to time domain unit numbers #3 to #9. Similarly, the second subresource set is a set including resources corresponding to a division 2, a division 3, and a division 4, that is, a set including eight symbols corresponding to the time domain unit numbers #3 to #9.

For example, FIG. 10 is a schematic diagram of determining the first subresources, where S₁≥S$_{1,1}$, and s$_M$>s$_{P,N}$. To be specific, the first OFDM symbol number included in the first time domain resource is greater than or equal to a smallest OFDM number included in the second time domain resource, and a largest OFDM symbol number included in the first time domain resource is greater than a largest OFDM symbol number included in the second time domain resource. In other words, the end number of the first time domain resource may be greater than the end number of the second time domain resource.

For example, as shown in FIG. 10, the OFDM end number included in the first time domain resource is a symbol #11, and the OFDM end number included in the second time domain resource is a symbol #9. It is determined that the K first subresources are Seti={ Set$_{1,1}$, ..., Set$_{1,k}$, ..., Set$_{1,K}$}, and a set Set$_{1,k}$ included in the k$^{th}$ (1≤k≤K) first subresource includes Q$_k$ OFDM numbers, which may be specifically a number set Set$_{1,k}$={s$_{1,k}$, s$_{2,k}$, ..., s$_{q,k}$, ..., s$_{Q,k}$}. Without loss of generality, a set Set$_{2,k}$ included in the k$^{th}$ (1≤k≤K-1) first subresource is a non-empty intersection of Set₁ and a set Set$_{2,n}$ (1≤n) included in the second time domain resource (the same as described in the foregoing).

An OFDM time domain unit number set included in the K$^{th}$ first subresource may be Set$_{1,K}$={s$_{1,K}$, s$_{2,n}$, ..., s$_{q,K}$, ..., s$_{Q,K}$}={s$_m$, ..., s$_N$}, where s$_m$ is a smallest OFDM number greater than s$_{P,N}$ in Set₁. As shown in FIG. 10, {s$_m$, ..., s$_N$} may represent all time domain unit numbers that are greater than the time domain unit end number of the second time domain resource.

For example, as shown in FIG. 10, an OFDM number set included in the K$^{th}$ first subresource may be {#10, #11}. The k$^{th}$ (1≤k≤K) first subresource includes Q OFDM numbers, which are specifically a number set {s$_{1,k}$, s$_{2,k}$, ..., s$_{q,k}$, ..., s$_{Q,k}$}, and

$$\begin{cases} s_{1,k} \leq s_{1,n} \\ s_{Q,k} \leq s_{P,n} \\ s_{Q,k-1} \leq s_{1,k} \end{cases}$$

is met, where

$s_{1,n}$ represents a smallest OFDM number included in the $n^{th}$ second subresource, represents a largest OFDM number included in the $n^{th}$ second time domain resource, $s_{Q,k}$ represents a largest OFDM number corresponding to the $k^{th}$ first subresource, and $s_{1,k}$ represents a smallest OFDM number corresponding to the $k^{th}$ first subresource. In addition, OFDM numbers corresponding to the K first subresources may be cascade arranged in an ascending order of k, and an obtained new number set may be completely consistent with $\{s_1, s_2, ..., s_m, ..., s_N\}$.

It should be noted that a largest OFDM number corresponding to $(k-1)^{th}$ first subresource is less than a smallest OFDM time domain unit number corresponding to the $k^{th}$ first subresource.

For example, as shown in FIG. 10, a start number included in the $2^{nd}$ first subresource (the division 2) is the symbol #3, and a second resource block (the division 2) included in the second time domain resource is #3 to #5, that is, $s_{1,k=2} \leq s_{1,n}=2$ is met. An end number of the $2^{nd}$ first subresource (the division 2) is the symbol #5, that is, $s_{Q=3,k=2} \leq s_{P=3,n=2}$ is met. In addition, a largest OFDM number corresponding to the $2^{nd}$ first subresource is less than a smallest OFDM number corresponding to the $3^{rd}$ first subresource.

For example, FIG. 11 is a schematic diagram of determining the first subresources, where $s_1 < s_{1,1}$, and $S_N > S_{P,N}$. To be specific, the first OFDM symbol number included in the first time domain resource is less than a smallest OFDM number included in the second time domain resource. In other words, the start number of the first time domain resource is greater than the start number of the second time domain resource. In addition, a largest OFDM symbol number included in the first time domain resource is greater than a largest OFDM symbol number included in the second time domain resource. In other words, the end number of the first time domain resource may be greater than the end number of the second time domain resource.

When k=1, a start number in an OFDM number set included in the $1^{st}$ first subresource is the OFDM start number of the first time domain resource, and the end number in the OFDM number set is an OFDM end number of the $1^{st}$ second subresource.

As shown in FIG. 11, an OFDM time domain unit number set $\{s_1, ..., s_{P,1}\}$ included in the $1^{st}$ first subresource (a division 1) may be {#2, #3, #4, #5}.

An OFDM number set included in the $k^{th}$ (k=K) first subresource may be $\{s_m, ..., s_N\}$, where $s_m$ is a smallest OFDM number greater than $s_{P,N}$ in $Set_1$. As shown in FIG. 11, $\{s_m, ..., s_N\}$ may represent numbers of all symbols that are in the first time domain resource and that have OFDM numbers greater than the OFDM end number of the second time domain resource.

Optionally, the $K^{th}$ first subresource in the K first subresources includes a time domain unit that is in the first time domain resource and that has a time domain unit number greater than the time domain unit end number of the second time domain resource.

For example, as shown in FIG. 11, an OFDM number set included in the $K^{th}$ first subresource may be $\{n_{1,K}, n_{2,K}, ..., n_{q,K}, ..., n_{Q,K}\}$, and may be {#10, #11}.

The $k^{th}$ $(2 \leq k \leq K-1)$ first subresource includes Q OFDM numbers, which are specifically a number set $\{s_{1,k-1}, s_{2,k-1}, ..., s_{q,k-1}, ..., s_{Q,k-1}\}$, and

$$\begin{cases} s_{1,k} \leq s_{1,n} \\ s_{Q,k} \leq s_{P,n} \\ s_{Q,k-1} \leq s_{1,k} \end{cases}$$

is met, where

$s_{1,n}$ represents a smallest OFDM number included in the $n^{th}$ second time domain resource, represents a largest OFDM number included in the $n^{th}$ second time domain resource, $s_{1,k}$ represents a smallest OFDM number corresponding to the $k^{th}$ first subresource. In addition, OFDM numbers corresponding to the K first subresources may be cascade arranged in an ascending order of k, and an obtained new number set may be completely consistent with $\{s_1, s_2, ..., s_m, ..., s_N\}$.

It should be noted that a largest OFDM number corresponding to $(k-1)^{th}$ first subresource is less than a smallest OFDM number corresponding to the $k^{th}$ first subresource.

For example, as shown in FIG. 11, a start number included in the $2^{nd}$ first subresource (a division 2) is a symbol #6, and second subresources (a division 2) included in the second time domain resource are #6 and #7, that is, $s_{1,k=2} \leq s_{1,n=2}$ is met. A time domain unit end number of the $2^{nd}$ first subresource (the division 2) is the symbol #6, that is, $s_{Q=2,k=} \leq s_{P+2,n=2}$ is met. In addition, a largest OFDM number corresponding to the $2^{nd}$ first subresource is less than a smallest OFDM number corresponding to the $3^{rd}$ first subresource.

It should be noted that, in the embodiments in FIG. 6 to FIG. 11, the first time domain resource includes consecutive time domain resources.

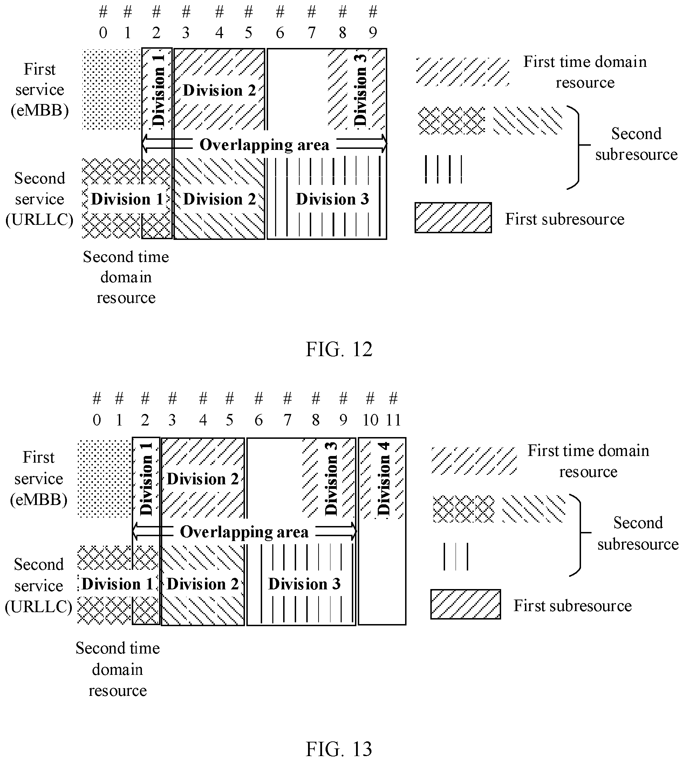

In an example, the first time domain resource may alternatively include inconsecutive time domain resources. The following describes, with reference to FIG. 12 and FIG. 13, determining of the first subresources when the first time domain resource includes inconsecutive resources.

Optionally, in this embodiment of this application, when the time domain unit end number of the first time domain resource is less than or equal to the time domain unit end number of the second time domain resource, and the first time domain resource includes resources with inconsecutive time domain unit numbers, the first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

As shown in FIG. 12, the first time domain resource does not use two symbols numbered #6 and #7. In FIG. 12, the end number of the first time domain resource is the same as that of the second time domain resource, each first subresource in the first subresource set has a start number that is greater than or equal to a start number of a corresponding second subresource in the second subresource set, and has an end number that is less than or equal to an end number of the corresponding second subresource in the second subresource set. The first subresource set may be {#3, #4, #5, #6, #8}, and the second subresource set may be {#3 to #9}, where a start number of the 3rd first subresource is less than a start number of the 3rd second subresource.

Optionally, when the time domain unit end number of the first time domain resource is greater than the time domain unit end number of the second time domain resource, and the first time domain resource includes resources with inconsecutive time domain unit numbers, the first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

Optionally, the $K^{th}$ first subresource in the K first subresources includes all time domain units that are in the first time domain resource and that have time domain unit numbers greater than the time domain unit end number of the second time domain resource.

As shown in FIG. 13, the first time domain resource does not use two symbols numbered #6 and #7. In FIG. 13, the time domain unit end number of the first time domain resource is greater than the time domain unit end number of the second time domain resource, each first subresource in the first subresource set has a start number that is greater than or equal to a start number of a corresponding second subresource in the second subresource set, and has an end number that is less than or equal to an end number of a corresponding second subresource in the second subresource set. The first subresource set may be {#3, #4, #5, #6, #8}, and the second subresource set may be {#3 to #9}, where a start number of the 3rd first subresource is less than a start number of the 3rd second subresource. The 4th first subresource may be {#10, #11}.

It should be understood that the foregoing examples of determining the first subresources are merely intended to help a person skilled in the art understand this embodiment of this application, but is not intended to limit this embodiment of this application to a specific value or a specific scenario in the example.

S240: The terminal device determines a quantity of K sub transport blocks included in the first service carried on the first time domain resource, where the K sub transport blocks one-to-one correspond to the K first subresources, and each sub transport block is carried on a corresponding first subresource.

In this embodiment of this application, the network device may receive, respectively on the K first subresources, the K sub transport blocks included in the first service of the terminal device, where the K sub transport blocks are carried on the corresponding first subresources.

It should be understood that, in this embodiment of this application, a data block used for sending the first service once on the first time domain resource is a transport block, one transport block may be divided into a plurality of sub transport blocks, each sub transport block is determined as a code block based on a maximum code block size of an encoder, and independent encoding is performed on each code block. The K sub transport blocks may be obtained by dividing one transport block, or the K sub transport blocks may be K transport blocks. In other words, the terminal device may schedule a plurality of transport blocks.

Optionally, the method further includes:

determining a transport block size of the first service based on the first time domain resource; and
determining sizes of the K sub transport blocks based on the transport block size and the K first subresources.

Optionally, the determining sizes of the K sub transport blocks based on the transport block size and the K first subresources includes:
determining the sizes of the K sub transport blocks based on the transport block size and a quantity of OFDM symbols included in each of the K first subresources, where a sum of the sizes of the K sub transport blocks equals to the transport block size.

For example, the terminal device determines, based on the transport block size of the first service and the quantity of symbols included in the first time domain resource, a size of a sub transport block corresponding to each symbol; and determines, based on the quantity of symbols included in each of the K first subresources, the K sub transport blocks corresponding to the K first subresources, where a sum of sizes of the K sub transport blocks is equal to a sum of sizes of the transport blocks.

Optionally, the method further includes: determining, based on the sizes of the K sub transport blocks and a maximum code block size of an encoder, code block sizes included in each of the K sub transport blocks.

It should be understood that independent encoding needs to be performed on the K sub transport blocks. If a size of a sub transport block is greater than the maximum code block size of the encoder, the sub transport block needs to be divided into a plurality of code blocks.

Optionally, the K sub transport blocks may be K transport blocks. That is, the terminal device may schedule a plurality of transport blocks. A size of each of the K transport blocks is determined based on a quantity of OFDM symbols included in a corresponding first subresource, and the $K^{th}$ transport block is carried on the $K^{th}$ first subresource after undergoing independent encoding.

It should be understood that the K sub transport blocks may correspond to different first services. In this case, the K code blocks may be K transport blocks.

The following describes, with reference to a specific embodiment, determining the K sub transport blocks included in the first service.

For example, in this embodiment of this application, the determined transport block size of the first time domain resource may be $TBS_{total}$, and a total quantity of OFDM symbols included in the first time domain resource is $N_s$. The first time domain resource may include K first subresources, and a quantity of OFDM symbols included in each first subresource may be $n_{s,k}$. A total quantity of OFDM symbols corresponding to the K first subresources equals to the quantity of OFDM symbols included in the K first time domain resources, and

$$N_S = \sum_{k=1}^{K} n_{s,k}.$$

A maximum code block size of an encoder is $K_{cb}$. For example, for an LDPC encoder, $K_{cb}$=3840 or 8448. A channel coding type is not limited in this embodiment of this application.

In an example, that the terminal device determines the K sub transport blocks corresponding to the K first subresources includes the following steps:

Step 1: Determine that a quantity of sub transport blocks (sub transport block, STB) is $C_1$=K. For example, one first subresource corresponds to one sub transport block, and different first subresources may correspond to different sub transport blocks.

Step 2: Determine a size (a quantity of bits) of each sub transport block as $TBS_{C1,i}$, where $C_{1,i} \in [1, C_1]$

$$\sum_{C_{1,i}=1}^{C_1} TBS_{C_{1,i}} = TBS_{total}$$

and is met.

For example, based on the transport block size $TBS_{total}$ of the first service and the quantity $N_s$ of symbols, a corresponding symbol-level data block size $TBS_s$ in the $N_s$ symbols may be determined according to the following formulas:

$$TBS_{S,H} = \left\lceil \frac{TBS_{total}}{N_s} \middle/ L_{bit} \right\rceil \cdot L_{bit};$$

$$TBS_{S,L} = \left\lfloor \frac{TBS_{total}}{N_s} \middle/ L_{bit} \right\rfloor \cdot L_{bit};$$

and

$$\Delta_{TBS} = TBS_{S,H} - TBS_{S,L},$$

where
$TBS_{S,H}$ represents rounding up of the symbol-level data block size. For example, 1.5 (bits) is rounded up to 2. $TBS_{S,L}$ represents rounding down of the symbol-level data block size. For example, 1.5 (bits) is rounded down to 1. A value of $L_{bit}$ is an integer multiple of 8 or an integer multiple of 16, for example, 8.

A TBS of the first $\left\lceil \frac{TBS_{S,H} \cdot N_S - TBS_{total}}{\Delta_{TBS}} \right\rceil$ symbols in an ascending order of the OFDM (time domain unit) numbers is determined as $TBS_{S,L}$.

A TBS of the last $N_S - \left\lceil \frac{TBS_{S,H} \cdot N_S - TBS_{total}}{\Delta_{TBS}} \right\rceil$ symbols in the ascending order of the OFDM (time domain unit) numbers is determined as $TBS_{S,H}$.

Based on Q OFDM (time domain unit) number sets $\{n_{1,C_{1,i}}, n_{2,C_{1,i}}, ..., n_{q,C_{1,i}}, ..., n_{Q,C_{1,i}}\}$ corresponding to the $C_{1,i}^{th}$ sub transport block,

a TBS of the sub transport block is

$$TBS_{C_{1,i}} = \sum_{q=1}^{Q} TBSn_{q,C_{1,i}}$$

, where $C_{1,i} \in [1, C_1]$, and $TBSN_{q,C_{1,i}}$ represents a TBS corresponding to a symbol whose OFDM (time domain unit) number is $n_{q,C_{1,i}}$.

Step 3: Determine, based on a size of a sub transport block and the maximum code block size of the

encoder, $C_2$ coding block sizes $TBS_{C_2,i}$ included in the sub transport block, where a sum of all coding block sizes corresponding to the sub transport block is the size of the sub transport block, that is,

$$\sum_{C_{2,i}=1}^{C_2} TBS_{C_{2,i}} = TBS_{C_{1,i}}$$

, and $C_{2,i} \in [1, C_2]$. Different code block sizes may be the same or may be different.

It should be understood that, if a size of a sub transport block does not exceed the maximum code block size of the encoder, the sub transport block is the same as a corresponding coding block.

For example, if $TBS_{C_1,i} < H_{Cb}$, $C_2 = 1$, that is, if a sub transport block is a code block, a size of the code block is $TBS_{C_1,i}$; or

it should be noted that, the quantity $C_2$ of code blocks is determined according to the size $TBS_{C_1,i}$ of the sub transport block and the maximum code block size H of the encoder, where

$$C_2 = \left\lceil TBS_{C_{1,i}} / H_{Cb} \right\rceil$$

. A manner of determining $C_2$ includes but is not limited to the following manners:

Manner 1: The quantity $C_2$ of code blocks is determined based on the size of code block.

For example, the code block size $TBS_{C_2,i}$ may be determined according to the following formulas:

$$TBS_{C_{2,H}} = \left\lceil \dfrac{TBS_{C_{1,i}}}{N_s} \middle/ L_{\text{bit}} \right\rceil . L_{\text{bit}} ;$$

$$TBS_{C_{2,L}} = \left\lfloor \dfrac{TBS_{C_{1,i}}}{N_s} \middle/ L_{\text{bit}} \right\rfloor . L_{\text{bit}} ;$$

and

$$TBS_{C2,\Delta} = TBS_{C_2,H} - TBS_{C_2,L} ,$$

where

$TBS_{C_2,H}$ represents roundeding up of the code block size. For example, 1.5 (bits) is rounded up to 2. $TBS_{C_2,L}$ represents rounding down of the code block size. For example, 1.5 (bits) is rounded down to 1.

$$\left\lceil \dfrac{TBS_{C_2,H} . C_2 - TBS_{C_{1,i}}}{TBS_{C_2,\Delta}} \right\rceil$$

A TB S of the first code blocks in an ascending order of code block indices is determined as $TBS_{C_2,L}$.

A TBS of the last

$$C_2 - \left\lceil \dfrac{TBS_{C_2,H} . C_2 - TBS_{C_{1,i}}}{TBS_{C_2,\Delta}} \right\rceil$$

code blocks in the ascending order of the code block indices is determined as $TBS_{C_2,\,H}$.

Manner 2: The quantity $C_2$ of code blocks is determined based on a quantity of symbols.

For example, a quantity $Q_{C_2,i}$ of symbols corresponding to the $C_{2,i}^{th}$ code block is determined based on a quantity Q of symbols in the sub transport block and the corresponding quantity $C_2$ of code blocks, where $C_{2,i} \in [1, C_2]$.

The code block size $TBS_{C_2,i}$ may be determined according to the following formulas:

$$Q_H = \left\lceil Q_{C_2,i} / C_2 \right\rceil ,$$

$$Q_L = \left\lfloor Q_{C_2,i} / C_2 \right\rfloor ,$$

and

$$\Delta_Q = Q_H - Q_L ,$$

where

$Q_H$ represents rounding up of the code block size. For example, 1.5 (bits) is rounded up to 2. $Q_L$ represents roundeding up of the code block size. For example, 1.5 (bits) is rounded down to 1.

$$\left\lceil \dfrac{Q_H . C_2 - Q}{\Delta_Q} \right\rceil$$

A TBS of the first symbols in an ascending order of OFDM (time domain unit) numbers is determined as $Q_L$.

$$C_2 - \left\lceil \dfrac{Q_H . C_2 - Q}{\Delta_Q} \right\rceil$$

A TBS of the last symbols in an ascending order of OFDM (time domain unit) numbers is determined as $Q_H$.

Based on a symbol quantity $Q_{C_2,i}$ and a symbol number set $\{n_{1,C_2,i}, n_{2,C_2,i}, ..., n_{Q,C_2,i}\}$ that correspond to each code block, the code block size is determined as

$$TBS_{C_2,i} = \sum_{q=1}^{Q_{C_2,i}} TBS_{q,C_2,i}$$

, where $C_{2,1} \in [1, C_2]$ is the quantity of determined symbols of the code block, and TBSs is a symbol-level TBSs of each symbol in the code block. Optionally, in this embodiment of this application, the terminal device may perform independent encoding on all the code blocks, perform independent rate matching on all the sub transport blocks, and map each sub transport block to one first subresource.

In this embodiment of this application, the first time domain resource may be divided into the K first subresources, one first subresource determines one transport block, a transport block size is determined based on a quantity of OFDM symbols included in a first subresource, a code block corresponding to the transport block occupies one first subresource after undergoing independent encoding, and code blocks corresponding to different transport blocks occupy different first subresources.

It should be understood that the foregoing example of determining the sub transport blocks and the code blocks is merely intended to help a person skilled in the art understand this embodiment of this application, but is not intended to limit this embodiment of this application to a specific value or a specific scenario in the example.

It should be understood that, sequence numbers of the foregoing processes do not mean execution sequences. The execution sequences of the processes should be determined based on functions and internal logic of the processes, and should not be construed as any limitation on the implementation processes of the embodiments of this application.

The foregoing describes in detail the data transmission method according to this embodiment of this application. In this application, the terminal device determines, by using the N second subresources included in the second time domain resource, the K first subresources included in the first time domain resource, to determine the K code blocks included in the first service. This can avoid excessive signaling overheads introduced in the system while ensuring resource sharing of a low-latency URLLC service and an eMBB service. It should be understood that the terminal device and the network device in this embodiment of this application may perform the method in the foregoing embodiment of this application. Therefore, for specific working processes of the following products, reference may be made to corresponding processes in the foregoing method embodiment.

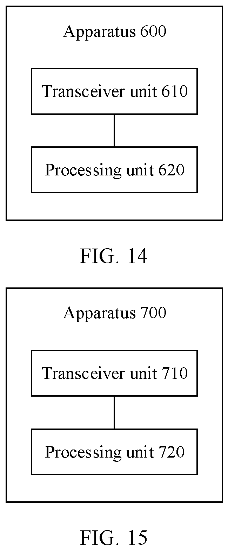

The following describes in detail a data transmission apparatus in this application with reference to FIG. 14 to FIG. 17.

FIG. 14 is a schematic block diagram of a communications apparatus according to an embodiment of this application. As shown in FIG. 14, the communications apparatus 600 may include a transceiver unit 610 and a processing unit 620.

In a possible design, the communications apparatus 600 may correspond to the terminal device in the foregoing method embodiment, for example, may be a terminal device or a chip configured in the terminal device. The communications apparatus 600 can perform the steps performed by the terminal device in FIG. 3.

The transceiver unit 610 is configured to obtain first information, where the first information is used to indicate a first time domain resource, and the first time domain resource is used to carry a first service.

The transceiver unit 610 is further configured to obtain second information, where the second information is used to indicate that a second time domain resource includes N second subresources, and N is an integer greater than or equal to 1.

The processing unit 620 is configured to determine, based on the first time domain resource and the N second subresources, K first subresources included in the first time domain resource, where K is an integer greater than or equal to 1.

The processing unit 620 is further configured to determine a quantity of K sub transport blocks included in the first service carried on the first time domain resource, where the K sub transport blocks one-to-one correspond to the K first subresources, and each sub transport block is carried on a corresponding first subresource.

Optionally, the processing unit 620 is specifically configured to determine the K first subresources based on a time domain unit start number of the first time domain resource, a time domain unit end number of the first time domain resource, and time domain unit end numbers of the N second subresources.

Optionally, the 1st first subresource in the K first subresources includes resources between the time domain unit start number of the first time domain resource and a time domain unit end number of the Lth second subresource, and the Lth second subresource is the 1st second subresource in a non-empty intersection of the first time domain resource and the N second subresources, where L is an integer less than or equal to N.

Optionally, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the 1st first subresource in the K first subresources, the second subresource set is a resource set including the (L+1)th second subresource to the Nth second subresource in the N second subresources, the K-1 first subresources have same time domain unit end numbers as corresponding second subresources in the second subresource set, and a time domain unit end number of the Kth first subresource is less than or equal to a time domain unit end number of a corresponding second subresource.

Optionally, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the 1st first subresource in the K first subresources, the second subresource set is a resource set including the (L+1)th second subresource to the Nth second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

Optionally, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and the K-2 first subresources have same time domain unit end numbers as corresponding second subresources in the second subresource set.

Optionally, when the time domain unit end number of the first time domain resource is greater than a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-2 first subresources other than the 1st first subresource and the Kth first subresource in the K first subresources, the second subresource set is a resource set including the (L+1)th second subresource to the Nth second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

Optionally, the Kth first subresource in the K first subresources includes a resource that is in the first time domain resource and that has a time domain unit start number greater than the time domain unit end number of the second time domain resource.

Optionally, the processing unit 620 is further configured to:

determine a transport block size of the first service based on the first time domain resource; and

determine sizes of the K sub transport blocks based on the transport block size and the K first subresources.

Optionally, the processing unit 620 is further configured to:
determine the sizes of the K sub transport blocks based on the transport block size and a quantity of OFDM symbols included in each of the K first subresources, where a sum of the sizes of the K sub transport blocks equals to the transport block size.

Optionally, the processing unit 620 is further configured to:
determine, based on the sizes of the K sub transport blocks and a maximum code block size of an encoder, a quantity of code blocks and code block sizes included in each of the K sub transport blocks.

Optionally, in this embodiment of this application, the terminal device may schedule K transport blocks, the K transport blocks may correspond to different first services, a size of each of the K transport blocks is determined based on a quantity of OFDM symbols included in a corresponding first subresource, and the Kth transport block is carried on the Kth first subresource after undergoing independent encoding.

Optionally, in this embodiment of this application, the first information may be carried in dynamic control signaling. For example, the first information may be carried in DCI sent by a network device to the terminal device. Optionally, in this embodiment of this application, the second information may be carried in semi-static radio resource control signaling. For example, the second information may be carried in RRC signaling sent by the network device to the terminal device.

FIG. 15 is a schematic block diagram of a data transmission apparatus 700 according to an embodiment of this application. It should be understood that the apparatus 700 may correspond to the network device in the foregoing method embodiment, for example, may be a network device or a chip configured in the network device. The communications apparatus 700 can perform the steps performed by the network device in FIG. 3. The apparatus 700 includes a transceiver unit 710 and a processing unit 720.

The transceiver unit 710 is configured to send first information, where the first information is used to indicate a first time domain resource, and the first time domain resource is used to carry a first service.

The transceiver unit 710 is further configured to send second information, where the second information is used to indicate that a second time domain resource includes N second subresources, and N is an integer greater than or equal to 1.

The processing unit 720 is configured to determine, based on the first time domain resource and the N second subresources, K first subresources included in the first time domain resource, where K is an integer greater than or equal to 1.

The transceiver unit 710 is further configured to receive, respectively on the K first subresources, K sub transport blocks included in the first service of a terminal device, where the K sub transport blocks are carried on the corresponding first subresources.

Optionally, the processing unit 720 is specifically configured to determine the K first subresources based on a time domain unit start number of the first time domain resource, a time domain unit end number of the first time domain resource, and time domain unit end numbers of the N second subresources.

Optionally, the $1^{st}$ first subresource in the K first subresources includes resources between the time domain unit start number of the first time domain resource and a time domain unit end number of the $L^{th}$ second subresource, and the $L^{th}$ second subresource is the $1^{st}$ second subresource in a non-empty intersection of the first time domain resource and the N second subresources, where L is an integer less than or equal to N.

Optionally, when the time domain unit end number of the first time domain resource is less than or equal to a time domain unit end number of the second time domain resource, and the first time domain resource includes resources with consecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource.

Optionally, in this embodiment of this application, when the time domain unit end number of the first time domain resource is less than or equal to a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-1 first subresources other than the $1^{st}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

Optionally, when the time domain unit end number of the first time domain resource is greater than a time domain unit end number of the second time domain resource, and the first time domain resource includes resources with consecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and the K-2 first subresources have same time domain unit end numbers as corresponding second subresources in the second subresource set.

Optionally, when the time domain unit end number of the first time domain resource is greater than a time domain unit end number of the second time domain resource, and the first time domain resource includes resources with inconsecutive time domain unit numbers, a first subresource set is a non-empty intersection of the first time domain resource and a second subresource set, where the first subresource set is a resource set including K-2 first subresources other than the $1^{st}$ first subresource and the $K^{th}$ first subresource in the K first subresources, the second subresource set is a resource set including the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

Optionally, the $K^{th}$ first subresource in the K first subresources includes a resource that is in the first time domain resource and that has a time domain unit start number greater than the time domain unit end number of the second time domain resource.

Optionally, the processing unit 720 is further configured to:

determine a transport block size of the first service based on the first time domain resource; and
determine sizes of the K sub transport blocks based on the transport block size and the K first subresources.

Optionally, the processing unit 720 is further configured to:
determine the sizes of the K sub transport blocks based on the transport block size and a quantity of OFDM symbols included in each of the K first subresources, where a sum of the sizes of the K sub transport blocks equals to the transport block size.

Optionally, the processing unit 720 is further configured to:

determine, based on the sizes of the K sub transport blocks and a maximum code block size of an encoder, a quantity of code blocks and code block sizes included in each of the K sub transport blocks.

Optionally, in this embodiment of this application, the network device may schedule K transport blocks, the K transport blocks may correspond to different first services, a size of each of the K transport blocks is determined based on a quantity of OFDM symbols included in a corresponding first subresource, and the $K^{th}$ transport block is carried on the $K^{th}$ first subresource after undergoing independent encoding.

Optionally, in this embodiment of this application, the first information may be carried in dynamic control signaling. For example, the first information may be carried in DCI sent by the network device to the terminal device. Optionally, in this embodiment of this application, the second information may be carried in semi-static radio resource control signaling. For example, the second information may be carried in RRC signaling sent by the network device to the terminal device.

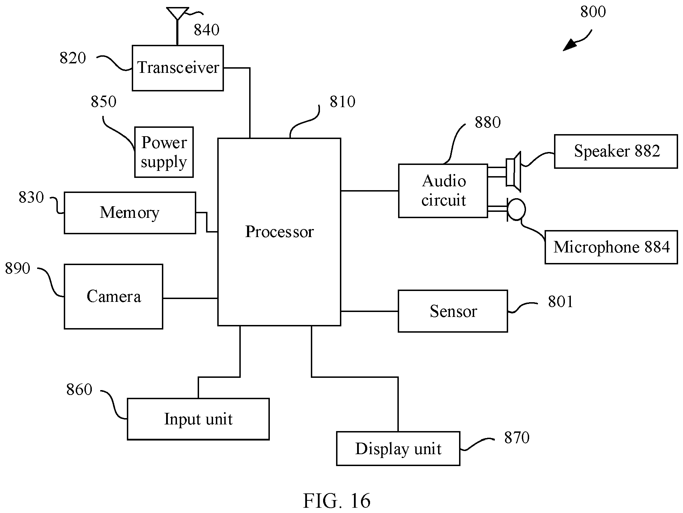

FIG. 16 is a schematic structural diagram of a data transmission apparatus 800 according to an embodiment of this application. The apparatus 800 may be a terminal device, and is applied to the system shown in FIG. 1, to perform functions of the terminal device in the foregoing method embodiment.

As shown in the figure, the terminal device 800 includes a processor 810 and a transceiver 820. Optionally, the terminal device 800 further includes a memory 830. The processor 810, the transceiver 820, and the memory 830 communicate with each other through an internal connection path, to transfer a control signal and/or a data signal. The memory 830 is configured to store a computer program. The processor 810 is configured to invoke the computer program from the memory 830 and run the computer program, to control the transceiver 820 to receive/send a signal. Optionally, the terminal device 800 may further include an antenna 840, configured to send, by using a radio signal, uplink data or uplink control signaling output by the transceiver 820.

The processor 810 and the memory 830 may be integrated into one processing apparatus. The processor 810 is configured to execute program code stored in the memory 830, to implement the foregoing functions. During specific implementation, the memory 830 may alternatively be integrated into the processor 810, or may be independent of the processor 810. The processor 810 may correspond to the processing unit 620 in FIG. 14.

The transceiver 820 may correspond to the transceiver unit 610 in FIG. 14, and may also be referred to as a communications unit. The transceiver 820 may include a receiver (or referred to as a receive machine or a receiver circuit) and a transmitter (or referred to as a transmit machine or a transmitter circuit). The receiver is configured to receive a signal, and the transmitter is configured to transmit a signal.

It should be understood that the terminal device 800 shown in FIG. 16 can implement the processes of the terminal device in the method embodiment shown in FIG. 3. The operations and/or the functions of the modules in the terminal device 800 are intended to implement corresponding procedures in the foregoing method embodiment. For details, refer to the descriptions in the foregoing method embodiment. To avoid repetition, detailed descriptions are properly omitted herein.

The processor 810 may be configured to perform an action implemented inside the terminal device in the foregoing method embodiment, and the transceiver 820 may be configured to perform an action of sending from the terminal device to a network device and an action of receiving from the network device in the foregoing method embodiment. For details, refer to the descriptions in the foregoing method embodiment. Details are not described herein again. Optionally, the terminal device 800 may further include a power supply 850, configured to supply power to various components or circuits in the terminal device.

In addition, to make functions of the terminal device more perfect, the terminal device 800 may further include one or more of an input unit 860, a display unit 870, an audio circuit 880, a camera 890, a sensor 801, and the like, and the audio circuit may further include a speaker 882, a microphone 884, and the like.

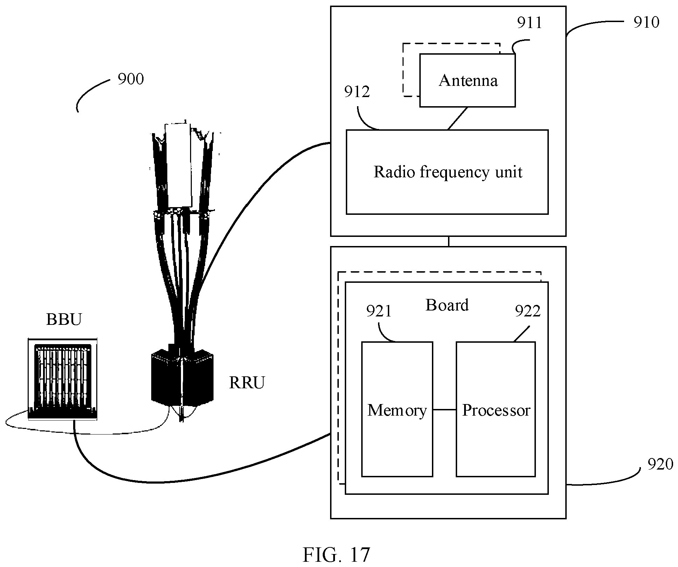

FIG. 17 is a schematic structural diagram of a transmission apparatus 900 according to an embodiment of this application. For example, FIG. 17 may be a schematic structural diagram of a network device. The network device 900 may be used in the system shown in FIG. 1, to perform functions of the network device in the foregoing method embodiment.

As shown in the figure, the network device 900 may include one or more radio frequency units, such as a remote radio unit (remote radio unit, RRU) 910 and one or more baseband units (baseband unit, BBU) (which may also be referred to as digital units, digital unit, DU) 920. The RRU 910 may be referred to as a communications unit, and corresponds to the transceiver unit 610 in FIG. 14. Optionally, the transceiver unit 910 may also be referred to as a transceiver machine, a transceiver circuit, a transceiver, or the like, and may include at least one antenna 911 and a radio frequency unit 912. Optionally, the transceiver unit 910 may include a receiving unit and a sending unit. The receiving unit may correspond to a receiver (or referred to as a receive machine or a receiver circuit), and the sending unit may correspond to a transmitter (or referred to as a transmit machine or a transmitter circuit). The RRU 910 is mainly configured to: receive and send radio frequency signals, and perform conversion between a radio frequency signal and a baseband signal. For example, the RRU 910 is configured to send first information to a terminal device. The BBU 920 is mainly configured to perform baseband processing, control the network device, and the like. The RRU 910 and the BBU 920 may be physically disposed together, or may be physically disposed separately. To be specific, the base station is a distributed base station.

The BBU 920 is a control center of the network device, or may be referred to as a processing unit. The BBU 920 may correspond to the processing unit 620 in FIG. 14, and is mainly configured to implement a baseband processing function, for example, channel coding, multiplexing, modulation, or spreading. For example, the BBU (a processing unit) may be configured to control the base station to perform an operation procedure related to the network device in the foregoing method embodiment, for example, generate the foregoing indication information.

In an example, the BBU 920 may include one or more boards, and a plurality of boards may jointly support a radio access network (for example, an LTE network) having a single access standard, or may separately support radio access networks (for example, an LTE network, a 5G network, or another network) having different access standards. The BBU 920 further includes a memory 921 and a processor 922. The memory 921 is configured to store a necessary instruction and data. The processor 922 is configured to control the network device to perform necessary actions. For example, the processor 922 is configured to control the network device to perform an operation procedure related to the network device in the foregoing method embodiment. The memory 921 and the processor 922 may serve one or more boards. In other words, each board may be independently disposed with a memory and a processor, or a plurality of boards may share a same memory and a same processor. In addition, a necessary circuit may further be disposed on each board.

It should be understood that the network device 900 shown in FIG. 17 can implement the processes of the network device in the method embodiment shown in FIG. 3. The operations and/or the functions of the modules in the network device 900 are intended to implement corresponding procedures in the foregoing method embodiment. For details, refer to the descriptions in the foregoing method embodiment. To avoid repetition, detailed descriptions are properly omitted herein.

The BBU 920 may be configured to perform an action implemented inside the network device in the foregoing method embodiment, and the RRU 910 may be configured to perform an action of sending from the network device to the terminal device and an action of receiving from the terminal device in the foregoing method embodiment. For details, refer to the descriptions in the foregoing method embodiment. Details are not described herein again.

An embodiment of this application further provides a processing apparatus, including a processor and an interface. The processor is configured to perform the method in any one of the foregoing method embodiment.

It should be understood that the processing apparatus may be a chip. For example, the processing apparatus may be a field programmable gate array (field programmable gate array, FPGA), an application-specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a micro-controller (micro controller unit, MCU), a programmable controller (programmable logic device, PLD), or another integrated chip.

In an implementation process, steps in the foregoing method can be implemented by using a hardware integrated logic circuit in the processor, or by using instructions in a form of software. The steps of the method disclosed with reference to the embodiments of this application may be directly performed and completed by a hardware processor, or may be performed and completed by a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor. To avoid repetition, details are not described herein. It should be noted that the processor in the embodiments of this application may be an integrated circuit chip, and has a signal processing capability. In an implementation process, the steps in the foregoing method embodiment may be completed by using a hardware integrated logic circuit in the processor or instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in the embodiments of this application. The general-purpose processor may be a microprocessor, or may be any conventional processor or the like. Steps of the methods disclosed with reference to the embodiments of this application may be directly performed and completed by a hardware decoding processor, or may be performed and completed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with hardware of the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these types of memories and any memory of another proper type.

According to the method provided in the embodiments of this application, this application further provides a computer program product. The computer program product includes computer program code. When the computer program code is run on a computer, the computer is enabled to perform the method in the embodiment shown in FIG. 3.

According to the method provided in the embodiments of this application, this application further provides a computer readable medium. The computer readable medium stores program code. When the program code is run on a computer, the computer is enabled to perform the method in the embodiment shown in FIG. 3.

According to the method provided in the embodiments of this application, this application further provides a system. The system includes the foregoing one or more terminal devices and the foregoing one or more network devices.

All or some of the foregoing embodiments may be implemented by software, hardware, firmware, or any combination thereof. When software is used for implementation, all or some of the methods may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disc, SSD)), or the like.

The network device and the terminal device in the foregoing apparatus embodiments completely correspond to the network device and the terminal device in the method embodiment. A corresponding module or unit performs a corresponding step. For example, a communications unit (transceiver) performs a sending step or a receiving step in the method embodiment, and a step other than the sending step and the receiving step may be performed by the processing unit (processor). For a function of a specific unit, refer to the corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As shown in figures, both a computing device and an application that runs on a computing device may be components. One or more components may reside within a process and/or an execution thread, and a component may be located on one computer and/or distributed between two or more computers. In addition, these components may be executed by various computer readable media that store various data structures. For example, the components may communicate by using a local and/or remote process and according to, for example, a signal having one or more data packets (for example, data from two components interacting with another component in a local system, a distributed system, and/or across a network such as the internet interacting with other systems by using the signal).

A person of ordinary skill in the art may be aware that illustrative logical blocks (illustrative logical block) and steps (step) described with reference to the embodiments disclosed in this specification may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for detailed working processes of the foregoing system, apparatus, and unit, refer to corresponding processes in the foregoing method embodiment, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units are integrated into one unit.

In the foregoing embodiments, all or some of the functions of the function units may be implemented by software, hardware, firmware, or any combination thereof. When the software is used to implement the embodiments, all or some of the embodiments may be implemented in a form of a computer program product. The computer program product includes one or more computer instructions (programs). When the computer program instructions (programs) are loaded and executed on a computer, the procedures or functions according to the embodiments of this application are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in a form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

## Claims

1. A data transmission apparatus (600, 800), comprising:

   a transceiver unit (610, 820), configured to obtain first information, wherein the first information is used to indicate a first time domain resource, and the first time domain resource is used to carry a first service; and obtain second information, wherein the second information is used to indicate that a second time domain resource comprises N second subresources, N is an integer greater than or equal to 1, the second time domain resource is used to carry a second service that is different from the first service, and the first time domain resource and the second time domain resource have an overlapping area in time domain, and have at least an overlapping area in frequency domain; and
   a processing unit (620, 810), configured to determine, based on the first time domain resource and the N second subresources, K first subresources comprised in the first time domain resource, wherein K is an integer greater than or equal to 1; and determine a quantity of K sub transport blocks comprised in the first service carried on the first time domain resource, wherein in the K sub transport blocks one-to-one correspond to the K first subresources, and each sub transport block is carried on a corresponding first subresource.

2. The apparatus (600, 800) according to claim 1, wherein the processing unit (620, 810) is specifically configured to:
determine the K first subresources based on a time domain unit start number of the first time domain resource, a time domain unit end number of the first time domain resource, and time domain unit end numbers of the N second subresources.

3. The apparatus (600, 800) according to claim 1 or 2, wherein the $1^{st}$ first subresource in the K first subresources comprises resources between the time domain unit start number of the first time domain resource and a time domain unit end number of the $L^{th}$ second subresource, and the $L^{th}$ second subresource is the $1^{st}$ second subresource in a non-empty intersection of the first time domain resource and the N second subresources, wherein L is an integer less than or equal to N.

4. The apparatus (600, 800) according to claim 3, wherein when the time domain unit end number of the first time domain resource is less than or equal to a time domain unit end number of the second time domain resource, and the first time domain resource comprises resources with consecutive time domain unit numbers, a first subresource set is a non-empty intersection of the first time domain resource and a second subresource set, wherein the first subresource set is a resource set comprising K-1 first subresources other than the $1^{st}$ first subresource in the K first subresources, the second subresource set is a resource set comprising the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource.

5. The apparatus (600, 800) according to claim 3, wherein when the time domain unit end number of the first time domain resource is less than or equal to a time domain unit end number of the second time domain resource, and the first time domain resource comprises resources with inconsecutive time domain unit numbers, a first subresource set is a non-empty intersection of the first time domain resource and a second subresource set, wherein the first subresource set is a resource set comprising K-1 first subresources other than the $1^{st}$ first subresource in the K first subresources, the second subresource set is a resource set comprising the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

6. The apparatus (600, 800) according to claim 3, wherein when the time domain unit end number of the first time domain resource is greater than a time domain unit end number of the second time domain resource, and the first time domain resource comprises resources with consecutive time domain unit numbers, a first subresource set is a non-empty intersection of the first time domain resource and a second subresource set, wherein the first subresource set is a resource set comprising K-2 first subresources other than the $1^{st}$ first subresource and the $K^{th}$ first subresource in the K first subresources, the second subresource set is a resource set comprising the $(L+1)^{th}$ second subresource to the $N^{th}$ second subresource in the N second subresources, and the K-2 first subresources have same time domain unit end numbers as corresponding second subresources in the second subresource set.

7. The apparatus (600, 800) according to claim 3, wherein when the time domain unit end number of the first time domain resource is greater than a time domain unit end number of the second time domain resource, and the first time domain resource comprises resources with inconsecutive time domain unit numbers, a first subresource set is a non-empty intersection of the first time domain resource and a second subresource set, wherein the first subresource set is a resource set comprising K-2 first subresources other than the $1^{st}$ first subresource and the $K^{th}$ first subresource in the K first subresources, the second subresource set is a resource set comprising the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has an end position that is less than or equal to a time domain unit end number of the corresponding second subresource in the second subresource set.

8. The apparatus (600, 800) according to claim 6 or 7, wherein the $K^{th}$ first subresource in the K first subresources comprises a resource that is in the first time domain resource and that has a time domain unit start number greater than the time domain unit end number of the second time domain resource.

9. A data reception apparatus (700), comprising:

a transceiver unit (710), configured to send first information, wherein the first information is used to indicate a first time domain resource, and the first time domain resource is used to carry a first service; and send second information, wherein the second information is used to indicate that a second time domain resource comprises N second subresources, N is an integer greater than or equal to 1, the second time domain resource is used to carry a second service that is different from the first service, and the first time domain resource and the second time domain resource have an overlapping area in time domain, and have at least an overlapping area in frequency domain; and
a processing unit (720), configured to determine, based on the first time domain resource and the N second subresources, K first subresources comprised in the first time domain resource, wherein K is an integer greater than or equal to 1, wherein
the transceiver unit (710) is further configured to receive, respectively on the K first subresources, K sub transport blocks comprised in the first service of a terminal device, wherein the K sub transport blocks are carried on the corresponding first subresources.

10. The apparatus (700) according to claim 9, wherein the processing unit (720) is specifically configured to: determine the K first subresources based on a time domain unit start number of the first time domain resource, a time domain unit end number of the first time domain resource, and time domain unit end numbers of the N second subresources.

11. The apparatus (700) according to claim 9 or 10, wherein the 1st first subresource in the K first subresources comprises resources between the time domain unit start number of the first time domain resource and a time domain unit end number of the $L^{th}$ second subresource, and the $L^{th}$ second subresource is the 1st second subresource in a non-empty intersection of the first time domain resource and the N second subresources, wherein L is an integer less than or equal to N.

12. The apparatus (700) according to claim 11, wherein when the time domain unit end number of the first time domain resource is less than or equal to a time domain unit end number of the second time domain resource, and the first time domain resource comprises resources with consecutive time domain unit numbers, a first subresource set is a non-empty intersection of the first time domain resource and a second subresource set, wherein the first subresource set is a resource set comprising K-1 first subresources other than the 1st first subresource in the K first subresources, the second subresource set is a resource set comprising the $(L+1)^{th}$ second subresource to the $N^{th}$ second subresource in the N second subresources, the K-1 first subresources have same time domain unit end numbers as corresponding second subresources in the second subresource set, and a time domain unit end number of the $K^{th}$ first subresource is less than or equal to a time domain unit end number of a corresponding second subresource.

13. The apparatus (700) according to claim 11, wherein when the time domain unit end number of the first time domain resource is less than or equal to a time domain unit end number of the second time domain resource, and the first time domain resource comprises resources with inconsecutive time domain unit numbers, a first subresource set is a non-empty intersection of the first time domain resource and a second subresource set, wherein the first subresource set is a resource set comprising K-1 first subresources other than the 1st first subresource in the K first subresources, the second subresource set is a resource set comprising the $(L+1)^{th}$ second subresource to the $N^{th}$ second subresource in the N second subresources, and each first subresource in the first subresource set has a time domain unit start number that is greater than or equal to a time domain unit start number of a corresponding second subresource in the second subresource set, and has a time domain unit end number that is less than or equal to a time domain unit end number of the corresponding second subresource in the second subresource set.

14. The apparatus (700) according to claim 11, wherein when the time domain unit end number of the first time domain resource is greater than a time domain unit end number of the second time domain resource, and the first time domain resource comprises resources with consecutive time domain unit numbers, a first subresource set is a non-empty intersection of the first time domain resource and a second subresource set, wherein the first subresource set is a resource set comprising K-2 first subresources other than the 1st first subresource and the $K^{th}$ first subresource in the K first subresources, the second subresource set is a resource set comprising the $(L+1)^{th}$ second subresource to the $N^{th}$ second subresource in the N second subresources, and the K-2 first subresources have same time domain unit end numbers as corresponding second subresources in the second subresource set.

**15.** A data reception method (200), comprising:

sending first information (S210), wherein the first information is used to indicate a first time domain resource, and the first time domain resource is used to carry a first service; sending (S220) second information, wherein the second information is used to indicate that a second time domain resource comprises N second subresources, N is an integer greater than or equal to 1, the second time domain resource is used to carry a second service that is different from the first service, and the first time domain resource and the second time domain resource have an overlapping area in time domain, and have at least an overlapping area in frequency domain; determining (S230), based on the first time domain resource and the N second subresources, K first subresources comprised in the first time domain resource, wherein K is an integer greater than or equal to 1; and receiving, respectively on the K first subresources, K sub transport blocks comprised in the first service of a terminal device, wherein the K sub transport blocks are carried on the corresponding first subresources.

**Patentansprüche**

**1.** Datenübertragungsvorrichtung (600, 800), umfassend:

eine Sendeempfängereinheit (610, 820), die dazu konfiguriert ist, erste Informationen zu erlangen, wobei die ersten Informationen dazu verwendet werden, eine erste Zeitbereichsressource anzuzeigen, und die erste Zeitbereichsressource dazu verwendet wird, einen ersten Dienst zu übertragen; und zweite Informationen zu erlangen, wobei die zweiten Informationen dazu verwendet werden, anzuzeigen, dass eine zweite Zeitbereichsressource N zweite Unterressourcen umfasst, wobei N eine ganze Zahl größer als oder gleich 1 ist, wobei die zweite Zeitbereichsressource dazu verwendet wird, einen zweiten Dienst zu übertragen, der sich von dem ersten Dienst unterscheidet, und die erste Zeitbereichsressource und die zweite Zeitbereichsressource einen Überlappungsbereich in dem Zeitbereich aufweisen und mindestens einen Überlappungsbereich in einem Frequenzbereich aufweisen; und eine Verarbeitungseinheit (620, 810), die dazu konfiguriert ist, basierend auf der ersten Zeitbereichsressource und den N zweiten Unterressourcen K erste Unterressourcen zu bestimmen, die in der ersten Zeitbereichsressource enthalten sind, wobei K eine ganze Zahl größer als oder gleich 1 ist; und eine Menge von K Untertransportblöcken zu bestimmen, die in dem ersten Dienst, der auf der ersten Zeitbereichsressource übertragen wird, enthalten sind, wobei die K Untertransportblöcke eins zu eins den K ersten Unterressourcen entsprechen und jeder Untertransportblock auf einer entsprechenden ersten Unterressource übertragen wird.

**2.** Vorrichtung (600, 800) nach Anspruch 1, wobei die Verarbeitungseinheit (620, 810) insbesondere zu Folgendem konfiguriert ist:
Bestimmen der K ersten Unterressourcen basierend auf einer Zeitbereichseinheitsstartnummer der ersten Zeitbereichsressource, einer Zeitbereichseinheitsendnummer der ersten Zeitbereichsressource und Zeitbereichseinheitsendnummern der N zweiten Unterressourcen.

**3.** Vorrichtung (600, 800) nach Anspruch 1 oder 2, wobei die 1. erste Unterressource in den K ersten Unterressourcen Ressourcen zwischen der Zeitbereichseinheitsstartnummer der ersten Zeitbereichsressource und einer Zeitbereichseinheitsendnummer der L-ten zweiten Unterressource umfasst und die L-te zweite Unterressource die 1. zweite Unterressource in einer nicht leeren Schnittmenge der ersten Zeitbereichsressource und der N zweiten Unterressourcen ist, wobei L eine ganze Zahl kleiner als oder gleich N ist.

**4.** Vorrichtung (600, 800) nach Anspruch 3, wobei, wenn die Zeitbereichseinheitsendnummer der ersten Zeitbereichsressource kleiner als oder gleich einer Zeitbereichseinheitsendnummer der zweiten Zeitbereichsressource ist und die erste Zeitbereichsressource Ressourcen mit aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-1 erste Unterressourcen, die nicht die 1. erste Unterressource in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, wobei die K-1 ersten Unterressourcen dieselben Zeitbereichseinheitsendnummern wie entsprechende zweite Unterressourcen in dem zweiten Unterressourcensatz aufweisen und eine Zeitbereichseinheitsendnummer der K-ten ersten Unterressource kleiner als oder gleich einer Zeitbereichseinheitsendnummer einer entsprechenden zweiten Unterressource ist.

**5.** Vorrichtung (600, 800) nach Anspruch 3, wobei, wenn die Zeitbereichseinheitsendnummer der ersten Zeitbereichsressource kleiner als oder gleich einer Zeitbereichseinheitsendnummer der zweiten Zeitbereichsressource ist und die erste Zeitbereichsressource Ressourcen mit nicht aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-1 erste Unterressourcen, die nicht die 1. erste Unterressource in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, und jede erste Unterressource in dem ersten Unterressourcensatz eine Zeitbereichseinheitsstartnummer, die größer als oder gleich einer Zeitbereichseinheitsstartnummer einer entsprechenden zweiten Unterressource in dem zweiten Unterressourcensatz ist, aufweist und eine Zeitbereichseinheitsendnummer, die kleiner als oder gleich einer Zeitbereichseinheitsendnummer der entsprechenden zweiten Unterressource in dem zweiten Unterressourcensatz ist, aufweist.

**6.** Vorrichtung (600, 800) nach Anspruch 3, wobei, wenn die Zeitbereichseinheitsendnummer der ersten Zeitbereichsressource größer als eine Zeitbereichseinheitsendnummer der zweiten Zeitbereichsressource ist und die erste Zeitbereichsressource Ressourcen mit aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-2 erste Unterressourcen, die nicht die 1. erste Unterressource und die K-ten ersten Unterressourcen in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, und die K-2 ersten Unterressourcen dieselben Zeitbereichseinheitsendnummern wie entsprechende zweite Unterressourcen in dem zweiten Unterressourcensatz aufweisen.

**7.** Vorrichtung (600, 800) nach Anspruch 3, wobei, wenn die Zeitbereichseinheitsendnummer der ersten Zeitbereichsressource größer als eine Zeitbereichseinheitsendnummer der zweiten Zeitbereichsressource ist und die erste Zeitbereichsressource Ressourcen mit nicht aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-2 erste Unterressourcen, die nicht die 1. erste Unterressource und die K-ten ersten Unterressourcen in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, und wobei jede der ersten Unterressource in dem ersten Unterressourcensatz eine Zeitbereichseinheitsstartnummer, die größer als oder gleich einer Zeitbereichseinheitsstartnummer einer entsprechenden zweiten Unterressource in dem zweiten Unterressourcensatz ist, aufweist und eine Endposition, die kleiner als oder gleich einer Zeitbereichseinheitsendnummer der entsprechenden zweiten Unterressource in dem zweiten Unterressourcensatz ist, aufweist.

**8.** Vorrichtung (600, 800) nach Anspruch 6 oder 7, wobei die K-te erste Unterressource in den K ersten Unterressourcen eine Ressource, die sich in der ersten Zeitbereichsressource befindet und die eine Zeitbereichseinheitsstartnummer aufweist, die größer als die Zeitbereichseinheitsendnummer der zweiten Zeitbereichsressource ist, umfasst.

**9.** Datenempfangsvorrichtung (700), umfassend:

eine Sendeempfängereinheit (710), die dazu konfiguriert ist, erste Informationen zu senden, wobei die ersten Informationen dazu verwendet werden, eine erste Zeitbereichsressource anzuzeigen, und die erste Zeitbereichsressource dazu verwendet wird, einen ersten Dienst zu übertragen; und zweite Informationen zu senden, wobei die zweiten Informationen dazu verwendet werden, anzuzeigen, dass eine zweite Zeitbereichsressource N zweite Unterressourcen umfasst, wobei N eine ganze Zahl größer als oder gleich 1 ist, wobei die zweite Zeitbereichsressource dazu verwendet wird, einen zweiten Dienst zu übertragen, der sich von dem ersten Dienst unterscheidet, und die erste Zeitbereichsressource und die zweite Zeitbereichsressource einen Überlappungsbereich in dem Zeitbereich aufweisen und mindestens einen Überlappungsbereich in einem Frequenzbereich aufweisen; und

eine Verarbeitungseinheit (720), die dazu konfiguriert ist, basierend auf der ersten Zeitbereichsressource und den N zweiten Unterressourcen K erste Unterressourcen, die in der ersten Zeitbereichsressource umfasst sind, zu bestimmen, wobei K eine ganze Zahl größer als oder gleich 1 ist, wobei

die Sendeempfängereinheit (710) ferner dazu konfiguriert ist, jeweils auf den K ersten Unterressourcen K Untertransportblöcke, die in dem ersten Dienst eines Endgeräts umfasst sind, zu empfangen, wobei die K Untertransportblöcke auf den entsprechenden ersten Unterressourcen übertragen werden.

10. Vorrichtung (700) nach Anspruch 9, wobei die Verarbeitungseinheit (720) insbesondere zu Folgendem konfiguriert ist:
Bestimmen der K ersten Unterressourcen basierend auf einer Zeitbereichseinheitsstartnummer der ersten Zeitbereichsressource, einer Zeitbereichseinheitsendnummer der ersten Zeitbereichsressource und Zeitbereichseinheitsendnummern der N zweiten Unterressourcen.

11. Vorrichtung (700) nach Anspruch 9 oder 10, wobei die 1. erste Unterressource in den K ersten Unterressourcen Ressourcen zwischen der Zeitbereichseinheitsstartnummer der ersten Zeitbereichsressource und einer Zeitbereichseinheitsendnummer der L-ten zweiten Unterressource umfasst und die L-te zweite Unterressource die 1. zweite Unterressource in einer nicht leeren Schnittmenge der ersten Zeitbereichsressource und der N zweiten Unterressourcen ist, wobei L eine ganze Zahl kleiner als oder gleich N ist.

12. Vorrichtung (700) nach Anspruch 11, wobei, wenn die Zeitbereichseinheitsendnummer der ersten Zeitbereichsressource kleiner als oder gleich einer Zeitbereichseinheitsendnummer der zweiten Zeitbereichsressource ist und die erste Zeitbereichsressource Ressourcen mit aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-1 erste Unterressourcen, die nicht die 1. erste Unterressource in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, wobei die K-1 ersten Unterressourcen dieselben Zeitbereichseinheitsendnummern wie entsprechende zweite Unterressourcen in dem zweiten Unterressourcensatz aufweisen und eine Zeitbereichseinheitsendnummer der K-ten ersten Unterressource kleiner als oder gleich einer Zeitbereichseinheitsendnummer einer entsprechenden zweiten Unterressource ist.

13. Vorrichtung (700) nach Anspruch 11, wobei, wenn die Zeitbereichseinheitsendnummer der ersten Zeitbereichsressource kleiner als oder gleich einer Zeitbereichseinheitsendnummer der zweiten Zeitbereichsressource ist und die erste Zeitbereichsressource Ressourcen mit nicht aufeinanderfolgenden Zeitbereichseinheitsnummern umfasst, ein erster Unterressourcensatz eine nicht leere Schnittmenge der ersten Zeitbereichsressource und eines zweiten Unterressourcensatz ist, wobei der erste Unterressourcensatz ein Ressourcensatz ist, der K-1 erste Unterressourcen, die nicht die 1. erste Unterressource in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, und jede der ersten Unterressourcen in dem ersten Unterressourcensatz eine Zeitbereichseinheitsstartnummer, die größer als oder gleich einer Zeitbereichseinheitsstartnummer einer entsprechenden zweiten Unterressource in dem zweiten Unterressourcensatz ist, aufweist und eine Zeitbereichseinheitsendnummer, die kleiner als oder gleich einer Zeitbereichseinheitsendnummer der entsprechenden zweiten Unterressource in dem zweiten Unterressourcensatz ist, aufweist.

14. Vorrichtung (700) nach Anspruch 11, wobei, wenn die Zeitbereichseinheitsendnummer der ersten Zeitbereichsressource größer als eine Zeitbereichseinheitsendnummer der zweiten Zeitbereichsressource ist und die erste Zeitbereichsressource Ressourcen mit aufeinanderfolgenden Zeitbereichseinheitsnummern umfasst, ein erster Unterressourcensatz eine nicht leere Schnittmenge der ersten Zeitbereichsressource und eines zweiten Unterressourcensatzes ist, wobei der erste Unterressourcensatz ein Ressourcensatz ist, der K-2 erste Unterressourcen, die nicht die 1. erste Unterressource und die K-ten ersten Unterressourcen in den K ersten Unterressourcen sind, umfasst, wobei der zweite Unterressourcensatz ein Ressourcensatz ist, der die (L+1)-te zweite Unterressource bis zu der N-ten zweiten Unterressource in den N zweiten Unterressourcen umfasst, und die K-2 ersten Unterressourcen dieselben Zeitbereichseinheitsendnummern wie entsprechende zweite Unterressourcen in dem zweiten Unterressourcensatz aufweisen.

15. Datenempfangsverfahren (200), umfassend:

Senden erster Informationen (S210), wobei die ersten Informationen dazu verwendet werden, eine erste Zeitbereichsressource anzuzeigen, und die erste Zeitbereichsressource dazu verwendet wird, einen ersten Dienst zu übertragen;
Senden (S220) zweiter Informationen, wobei die zweiten Informationen dazu verwendet werden, anzuzeigen, dass eine zweite Zeitbereichsressource N zweite Unterressourcen umfasst, wobei N eine ganze Zahl größer als oder gleich 1 ist, wobei die zweite Zeitbereichsressource dazu verwendet wird, einen zweiten Dienst zu übertragen, der sich von dem ersten Dienst unterscheidet, und die erste Zeitbereichsressource und die zweite Zeitbereichsressource einen Überlappungsbereich in dem Zeitbereich aufweisen und mindestens einen Überlappungsbereich in einem Frequenzbereich aufweisen;

Bestimmen (S230), basierend auf der ersten Zeitbereichsressource und den N zweiten Unterressourcen, von K ersten Unterressourcen, die in der ersten Zeitbereichsressource umfasst sind, wobei K eine ganze Zahl größer als oder gleich 1 ist; und

Empfangen, jeweils auf den K ersten Unterressourcen, von K Untertransportblöcken, die in dem ersten Dienst eines Endgeräts umfasst sind, wobei die K Untertransportblöcke auf den entsprechenden ersten Unterressourcen übertragen werden.

## Revendications

1. Appareil de transmission de données (600, 800), comprenant :

une unité émettrice-réceptrice (610, 820), configurée pour obtenir des premières informations, dans lequel les premières informations sont utilisées pour indiquer une première ressource de domaine temporel, et la première ressource de domaine temporel est utilisée pour transporter un premier service ; et

obtenir des secondes informations, dans lequel les secondes informations sont utilisées pour indiquer qu'une seconde ressource de domaine temporel comprend N secondes sous-ressources, N est un nombre entier supérieur ou égal à 1, la seconde ressource de domaine temporel est utilisée pour transporter un second service qui est différent du premier service, et la première ressource de domaine temporel et la seconde ressource de domaine temporel ont une zone de chevauchement dans le domaine temporel, et ont au moins une zone de chevauchement dans le domaine fréquentiel ; et

une unité de traitement (620, 810), configurée pour déterminer, sur la base de la première ressource de domaine temporel et des N secondes sous-ressources, les K premières sous-ressources comprises dans la première ressource de domaine temporel, dans lequel K est un nombre entier supérieur ou égal à 1 ; et

déterminer une quantité de K sous-blocs de transport compris dans le premier service transporté sur la première ressource de domaine temporel, dans lequel les K sous-blocs de transport correspondant un à un aux K premières sous-ressources, et chaque sous-bloc de transport est transporté sur une première sous-ressource.

2. Appareil (600, 800) selon la revendication 1, dans lequel l'unité de traitement (620, 810) est spécifiquement configurée pour :

déterminer les K premières sous-ressources sur la base d'un numéro de début d'unité de domaine temporel de la première ressource de domaine temporel, d'un numéro de fin d'unité de domaine temporel de la première ressource de domaine temporel et de numéros de fin d'unité de domaine temporel des N secondes sous-ressources.

3. Appareil (600, 800) selon la revendication 1 ou 2, dans lequel la 1$^{\text{ère}}$ première sous-ressource dans les K premières sous-ressources comprend des ressources entre le numéro de début d'unité de domaine temporel de la première ressource de domaine temporel et un numéro de fin d'unité de domaine temporel de la L$^{\text{ième}}$ seconde sous-ressource, et la L$^{\text{ième}}$ seconde sous-ressource est la 1$^{\text{ère}}$ seconde sous-ressource dans une intersection non vide de la première ressource de domaine temporel et des N secondes sous-ressources, dans lequel L est un nombre entier inférieur ou égal à N.

4. Appareil (600, 800) selon la revendication 3, dans lequel lorsque le numéro de fin d'unité de domaine temporel de la première ressource de domaine temporel est inférieur ou égal à un numéro de fin d'unité de domaine temporel de la seconde ressource de domaine temporel, et la première ressource de domaine temporel comprend des ressources avec des numéros d'unité de domaine temporel consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-1 premières sous-ressources autres que la 1$^{\text{ère}}$ première sous-ressource dans les K premières sous-ressources, le second ensemble de sous-ressources est un ensemble de ressources comprenant la (L+1)$^{\text{ième}}$ seconde sous-ressource jusqu'à la N$^{\text{ième}}$ seconde sous-ressource dans les N secondes sous-ressources, les K-1 premières sous-ressources ont les mêmes numéros de fin d'unité de domaine temporel que des secondes sous-ressources correspondantes dans le second ensemble de sous-ressources, et un numéro de fin d'unité de domaine temporel de la K$^{\text{ième}}$ première sous-ressource est inférieur ou égal à un numéro de fin d'unité de domaine temporel d'une seconde sous-ressource correspondante.

**5.** Appareil (600, 800) selon la revendication 3, dans lequel lorsque le numéro de fin d'unité de domaine temporel de la première ressource de domaine temporel est inférieur ou égal à un numéro de fin d'unité de domaine temporel de la seconde ressource de domaine temporel, et la première ressource de domaine temporel comprend des ressources avec des numéros d'unité de domaine temporel non consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-1 premières sous-ressources autres que la 1$^{ère}$ première sous-ressource dans les K premières sous-ressources, le second ensemble de sous-ressources est un ensemble de ressources comprenant la (L+1)$^{ième}$ seconde sous-ressource jusqu'à la N$^{ième}$ seconde sous-ressource dans les N secondes sous-ressources, et chaque première sous-ressource dans le premier ensemble de sous-ressources a un numéro de début d'unité de domaine temporel qui est supérieur ou égal à un numéro de début d'unité de domaine temporel d'une seconde sous-ressource correspondante dans le second ensemble de sous-ressources, et a un numéro de fin d'unité de domaine temporel qui est inférieur ou égal à un numéro de fin d'unité de domaine temporel de la seconde sous-ressource correspondante dans le second ensemble de sous-ressources.

**6.** Appareil (600, 800) selon la revendication 3, dans lequel lorsque le numéro de fin d'unité de domaine temporel de la première ressource de domaine temporel est supérieur à un numéro de fin d'unité de domaine temporel de la seconde ressource de domaine temporel, et la première ressource de domaine temporel comprend des ressources avec des numéros d'unité de domaine temporel consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-2 premières sous-ressources autres que la 1$^{ère}$ première sous-ressource et la K$^{ième}$ première sous-ressource dans les K premières sous-ressources, le second ensemble de sous-ressources est un ensemble de ressources comprenant la (L+1)$^{ième}$ seconde sous-ressource jusqu'à la N$^{ième}$ seconde sous-ressource dans les N secondes sous-ressources, et les K-2 premières sous-ressources ont les mêmes numéros de fin d'unité de domaine temporel que des secondes sous-ressources correspondantes dans le second ensemble de sous-ressources.

**7.** Appareil (600, 800) selon la revendication 3, dans lequel lorsque le numéro de fin d'unité de domaine temporel de la première ressource de domaine temporel est supérieur à un numéro de fin d'unité de domaine temporel de la seconde ressource de domaine temporel, et la première ressource de domaine temporel comprend des ressources avec des numéros d'unité de domaine temporel non consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-2 premières sous-ressources autres que la 1$^{ère}$ première sous-ressource et la K$^{ième}$ première sous-ressource dans les K premières sous-ressources, le second ensemble de sous-ressources est un ensemble de ressources comprenant la (L+1)$^{ième}$ seconde sous-ressource jusqu'à la N$^{ième}$ seconde sous-ressource dans les N secondes sous-ressources, et chaque première sous-ressource dans le premier ensemble de sous-ressources a un numéro de début d'unité de domaine temporel qui est supérieur ou égal à un numéro de début d'unité de domaine temporel d'une seconde sous-ressource correspondante dans le second ensemble de sous-ressources, et a une position de fin qui est inférieure ou égale à un numéro de fin d'unité de domaine temporel de la seconde sous-ressource correspondante dans le second ensemble de sous-ressources.

**8.** Appareil (600, 800) selon la revendication 6 ou 7, dans lequel la K$^{ième}$ première sous-ressource dans les K premières sous-ressources comprend une ressource qui se trouve dans la première ressource de domaine temporel et qui a un numéro de début d'unité de domaine temporel supérieur au numéro de fin d'unité de domaine temporel de la seconde ressource de domaine temporel.

**9.** Appareil de réception de données (700), comprenant :

une unité émettrice-réceptrice (710), configurée pour envoyer des premières informations, dans lequel les premières informations sont utilisées pour indiquer une première ressource de domaine temporel, et la première ressource de domaine temporel est utilisée pour transporter un premier service ; et
envoyer des secondes informations, dans lequel les secondes informations sont utilisées pour indiquer qu'une seconde ressource de domaine temporel comprend N secondes sous-ressources, N est un nombre entier supérieur ou égal à 1, la seconde ressource de domaine temporel est utilisée pour transporter un second service qui est différent du premier service, et la première ressource de domaine temporel et la seconde ressource de domaine temporel ont une zone de chevauchement dans le domaine temporel, et ont au moins une zone de chevauchement dans le domaine fréquentiel ; et

une unité de traitement (720), configurée pour déterminer, sur la base de la première ressource de domaine temporel et des N secondes sous-ressources, les K premières sous-ressources comprises dans la première ressource de domaine temporel, dans lequel K est un nombre entier supérieur ou égal à 1, dans lequel l'unité émettrice-réceptrice (710) est en outre configurée pour recevoir, respectivement sur les K premières sous-ressources, K sous-blocs de transport compris dans le premier service d'un dispositif terminal, dans lequel les K sous-blocs de transport sont transportés sur les premières sous-ressources correspondantes.

10. Appareil (700) selon la revendication 9, dans lequel l'unité de traitement (720) est spécifiquement configurée pour :

déterminer les K premières sous-ressources sur la base d'un numéro de début d'unité de domaine temporel de la première ressource de domaine temporel, d'un numéro de fin d'unité de domaine temporel de la première ressource de domaine temporel et de numéros de fin d'unité de domaine temporel des N secondes sous-ressources.

11. Appareil (700) selon la revendication 9 ou 10, dans lequel la 1$^{ère}$ première sous-ressource dans les K premières sous-ressources comprend des ressources entre le numéro de début d'unité de domaine temporel de la première ressource de domaine temporel et un numéro de fin d'unité de domaine temporel de la L$^{ième}$ seconde sous-ressource, et la L$^{ième}$ seconde sous-ressource est la 1$^{ère}$ seconde sous-ressource dans une intersection non vide de la première ressource de domaine temporel et des N secondes sous-ressources, dans lequel L est un nombre entier inférieur ou égal à N.

12. Appareil (700) selon la revendication 11, dans lequel lorsque le numéro de fin d'unité de domaine temporel de la première ressource de domaine temporel est inférieur ou égal à un numéro de fin d'unité de domaine temporel de la seconde ressource de domaine temporel, et la première ressource de domaine temporel comprend des ressources avec des numéros d'unité de domaine temporel consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-1 premières sous-ressources autres que la 1$^{ère}$ première sous-ressource dans les K premières sous-ressources, le second ensemble de sous-ressources est un ensemble de ressources comprenant la (L+1)$^{ième}$ seconde sous-ressource jusqu'à la N$^{ième}$ seconde sous-ressource dans les N secondes sous-ressources, les K-1 premières sous-ressources ont les mêmes numéros de fin d'unité de domaine temporel que des secondes sous-ressources correspondantes dans le second ensemble de sous-ressources, et un numéro de fin d'unité de domaine temporel de la K$^{ième}$ première sous-ressource est inférieur ou égal à un numéro de fin d'unité de domaine temporel d'une seconde sous-ressource correspondante.

13. Appareil (700) selon la revendication 11, dans lequel lorsque le numéro de fin d'unité de domaine temporel de la première ressource de domaine temporel est inférieur ou égal à un numéro de fin d'unité de domaine temporel de la seconde ressource de domaine temporel, et la première ressource de domaine temporel comprend des ressources avec des numéros d'unité de domaine temporel non consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-1 premières sous-ressources autres que la 1$^{ère}$ première sous-ressource dans les K premières sous-ressources, le second ensemble de sous-ressources est un ensemble de ressources comprenant la (L+1)$^{ième}$ seconde sous-ressource jusqu'à la N$^{ième}$ seconde sous-ressource dans les N secondes sous-ressources, et chaque première sous-ressource dans le premier ensemble de sous-ressources a un numéro de début d'unité de domaine temporel qui est supérieur ou égal à un numéro de début d'unité de domaine temporel d'une seconde sous-ressource correspondante dans le second ensemble de sous-ressources, et a un numéro de fin d'unité de domaine temporel qui est inférieur ou égal à un numéro de fin d'unité de domaine temporel de la seconde sous-ressource correspondante dans le second ensemble de sous-ressources.

14. Appareil (700) selon la revendication 11, dans lequel lorsque le numéro de fin d'unité de domaine temporel de la première ressource de domaine temporel est supérieur à un numéro de fin d'unité de domaine temporel de la seconde ressource de domaine temporel, et la première ressource de domaine temporel comprend des ressources avec des numéros d'unité de domaine temporel consécutifs, un premier ensemble de sous-ressources est une intersection non vide de la première ressource de domaine temporel et d'un second ensemble de sous-ressources, dans lequel le premier ensemble de sous-ressources est un ensemble de ressources comprenant K-2 premières sous-ressources autres que la $1^{ère}$ première sous-ressource et la $K^{ième}$ première sous-ressource dans les K premières sous-ressources, le second ensemble de sous-ressources est un ensemble de ressources comprenant la $(L+1)^{ième}$ seconde sous-ressource jusqu'à la $N^{ième}$ seconde sous-ressource dans les N secondes sous-ressources, et les K-2 premières sous-ressources ont les mêmes numéros de fin d'unité de domaine temporel que des secondes sous-ressources correspondantes dans le second ensemble de sous-ressources.

15. Procédé de réception de données (200), comprenant :

l'envoi de premières informations (S210), dans lequel les premières informations sont utilisées pour indiquer une première ressource de domaine temporel, et la première ressource de domaine temporel est utilisée pour transporter un premier service ;
l'envoi (S220) de secondes informations, dans lequel les secondes informations sont utilisées pour indiquer qu'une seconde ressource de domaine temporel comprend N secondes sous-ressources, N est un nombre entier supérieur ou égal à 1, la seconde ressource de domaine temporel est utilisée pour transporter un second service qui est différent du premier service, et la première ressource de domaine temporel et la seconde ressource de domaine temporel ont une zone de chevauchement dans le domaine temporel, et ont au moins une zone de chevauchement dans le domaine fréquentiel ;
la détermination (S230), sur la base de la première ressource de domaine temporel et des N secondes sous-ressources, de K premières sous-ressources comprises dans la première ressource de domaine temporel, dans lequel K est un nombre entier supérieur ou égal à 1 ; et
la réception, respectivement sur les K premières sous-ressources, de K sous-blocs de transport compris dans le premier service d'un dispositif terminal, dans lequel les K sous-blocs de transport sont transportés sur les premières sous-ressources correspondantes.

FIG. 1

FIG. 2

Method 200

```
┌─────────────────────────┐                              ┌─────────────────────────┐
│     Terminal device     │                              │     Network device      │
└─────────────────────────┘                              └─────────────────────────┘
            │                                                         │
            │      S210: First information, where the first           │
            │    information is used to indicate a first time domain  │
            │◄─── resource, and the first time domain resource is ────│
            │           used to carry a first service                 │
            │                                                         │
            │      S220: Second information, where the second          │
            │    information is used to indicate that a second time    │
            │◄─── domain resource includes N second subresources, ────│
            │      and N is an integer greater than or equal to 1     │
            │                                                         │
┌───────────┴─────────────────────┐                                 │
│  S230: Determine, based on the first time                         │
│    domain resource and the N second                               │
│  subresources, K first subresources included                      │
│  in the first time domain resource, where K                       │
│    is an integer greater than or equal to 1                       │
└───────────┬─────────────────────┘                                 │
            │                                                         │
┌───────────┴─────────────────────┐                                 │
│    S240: Determine, based on the K first                          │
│  subresources, a quantity of K sub transport                      │
│  blocks included in the first service, where                      │
│    the K sub transport blocks one-to-one                          │
│  correspond to the K first subresources, and                      │
│    each sub transport block is carried on a                       │
│         corresponding first subresource                           │
└───────────┬─────────────────────┘                                 │
            │                                                         │
```

FIG. 3

Configuration 1    Configuration 2    Configuration 3  Configuration 4

FIG. 4

FIG. 5

FIG. 6

FIG. 7

FIG. 8

FIG. 9

FIG. 10

FIG. 11

FIG. 12

FIG. 13

Apparatus 600

Transceiver unit 610

Processing unit 620

FIG. 14

Apparatus 700

Transceiver unit 710

Processing unit 720

FIG. 15

FIG. 16

FIG. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018112932 A1
- WO 2018171606 A1